# EUROPÄISCHE PATENTANMELDUNG

(11) **EP 1 074 557 A2**
(43) Veröffentlichungstag der Anmeldung: **07.02.2001**
(21) Anmeldenummer: 00113891.6
(22) Anmeldetag: 30.06.2000
(51) Int. Cl.: C07F 17/00, C08F 10/00, C07F 7/08

(54) **Übergangsmetallverbindung, Ligandensystem, Katalysatorsystem und seine Verwendung zur Polymerisation von Olefinen**

(30) Priorität: 31.07.1999 DE 19936185
(71) Anmelder: TARGOR GmbH, 55116 Mainz (DE)
(72) Erfinder: Schottek, Jörg, Dr., 60486 Frankfurt (DE); Schauer, Diana, 63486 Bruchköbel (DE); Kratzer, Roland, Dr., 65830 Kriftel (DE)
(74) Vertreter: Stark, Vera, Dr.

(57) **Zusammenfassung**

Die vorliegende Erfindung betrifft Ligandensysteme enthalten Indenyl-Strukturen, sowie Übergangsmetallverbindungen des Typs Metallocen und Katalysatorsysteme enthaltend derartige Übergangsmetallverbindungen. Des weiteren wird die Verwendung der erfindungsgemäßen Übergangsmetallverbindungen in der Polymerisation von Olefinen, insbesondere zu Polyolefinen mit niedriger Molmasse, sowie ein entsprechendes Polymerisationsverfahren beschrieben.

## Beschreibung

Die vorliegende Erfindung betrifft Ligandensysteme, Übergangsmetallverbindungen, Katalysatorsysteme und ihre Verwendung in der Polymerisation von Olefinen.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Herstellung von Metallocenen ist an sich bekannt (US 4,752,597; US 5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium und Hafnium umgesetzt werden.

Für die Herstellung von isotaktischem Polypropylen mit niedriger Molmasse ist ein gangbarer Weg die Zudosierung von unverhältnismäßig hohen Mengen Wasserstoff während der Polymerisation. Das führt zu technisch schlecht beherrschbaren Prozessen und stark erhöhten Kosten.

Wünschenswert wäre daher ein kationisches Metallocenkatalysatorsystem in ungeträgerter oder geträgerter Form, welches mit nur geringen Mengen an zudosiertem Wasserstoff die gewünschten niedrigen Molmassen von isotaktischem Polypropylen liefert und dabei aber unverändert hohe Aktivitäten und Schmelzpunkte zeigt.

Isotaktisches Polypropylen mit niedriger Molmasse ist besonders für Folienprodukte von besonderem Interesse.

In EP-A-659757 und Spaleck et al., J. Mol. Catal. A: Chemical 1998, 128, 279-287 sind Metallocenverbindungen beschrieben, die zwei unterschiedlich substituierte Indenylliganden enthalten. Dabei zeigt sich, daß bei Metallocenverbindungen, bei denen ein Substituent in 2-Position an einem der Indenylsubstituenten fehlt, isotaktisches Polypropylen mit niedrigen Molmassen von 100000-300000 g/mol liefern. Ein entscheidender Nachteil dieser dort beschriebenen Verbindungen besteht jedoch darin, daß die Polymerisationsaktivitäten bei einer heterogen geführten Polymerisation im Vergleich zu einer homogenen geführten Polymerisation drastisch einbrechen. Das führt zu einer begrenzten kommerziellen Nutzung.

Es bestand somit die Aufgabe Metallocene zu finden, die nach Umwandlung in die polymerisationsaktive Spezies, die Nachteile des Standes der Technik vermeiden und insbesondere eine deutlich erhöhte Polymerisationsaktivität bei heterogener Polymerisationsdurchführung zeigen.

Es wurde nun überraschenderweise gefunden, daß durch Metallocene, insbesondere solche, die spezielle Substitutionen am Indenylliganden besitzen, die der Erfindung zugrunde liegende Aufgabe gelöst wird.

Gegenstand der vorliegenden Erfindung sind Verbindungen der Formel (I), 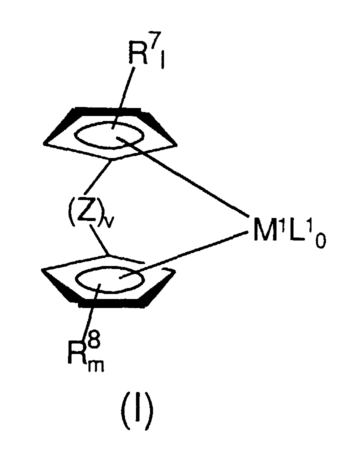 worin
- M¹: ein Metall der III., IV., V. oder VI. Nebengruppe des Periodensystems der Elemente ist, insbesondere Ti, Zr oder Hf,
- R⁷: gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁷ sind eine C₁-C₃₀ - kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇₋C₃₀-Alkylaryl oder C₁-C₁₂-Alkoxy ist, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits substituiert sein kann,
- R⁸: gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁸ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl die mit dem Cyclopentadienylring Azapentalene, Thiopentalen oder Phosphorpentalene bilden, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇₋C₃₀-Alkylaryl oder C₁-C₁₂-Alkoxy ist, oder zwei oder mehrere Reste R⁸ können so miteinander verbunden sein, daß die Reste R⁸ und die sie verbindenden Atome des Cyclopentadienylringes ein C₄-C₂₄-Ringsystem bilden, welches seinerseits substituiert sein kann,
- l: gleich 5 für v = 0, und l gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclo-pentadienylringen bezeichnet und v ist 0 oder 1.

Beispiele für Z sind Gruppen MR¹⁰R¹¹, worin M Kohlenstoff oder Silicium ist und R¹⁰ und R¹¹ gleich oder verschieden eine C₁-C₂₀-kohlenwasserstoffhaltige Gruppe wie C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten. Besonders bevorzugte Gruppen für Z sind Si(Me)₂, Si(Ph)₂, Si(MeEt), Si(PhMe), Si(PhEt), Si(Et)₂, worin Ph für substituiertes oder unsubstituiertes Phenyl und Et für Ethyl steht. Z kann auch mit einem oder mehreren Resten R⁷ und/oder R⁸ ein mono- oder polycyclisches Ringsystem bilden. Bei den vorstehenden Resten steht Ph für substituiertes oder unsubstituiertes Phenyl, Et für Ethyl und Me für Methyl.

Bevorzugt sind verbrückte Metallocenverbindungen der Formel (I), insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₈-Alkyl oder C₆-C₁₈-Aryl, wobei auch zwei oder mehrere Substituenten des Indenylrings zusammen ein Ringsystem bilden können.

Besonders bevorzugt sind verbrückte Metallocenverbindungen der Formel (II), 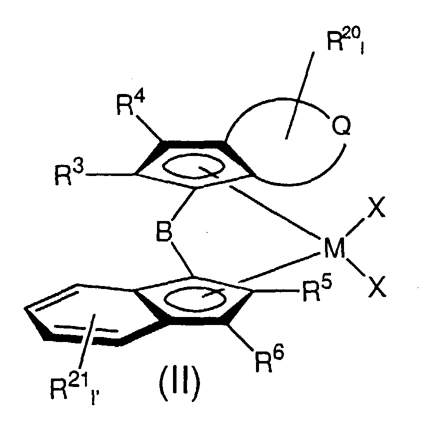 worin
- M: gleich Ti, Zr oder Hf ist, besonders bevorzugt Zirkonium,
- R³: gleich ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist,
- R⁵: gleich ein Wasserstoffatom ist,
- R⁴, R⁶: gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist,
- R²⁰, R²¹: gleich oder verschieden sind und ein Wasserstoffatom, Halogenatom oder eine C₁-C₂₀ - kohlenstoffhaltige Gruppe bedeuteten, bevorzugt eine lineare oder verzweigte C₁-C₁₈-Alkylgruppe, wie Methyl, Ethyl, tert.-Butyl, Cyclohexyl oder Octyl, C₂-C₁₀-Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl sind, und zwei Reste R²⁰ oder R²¹ ein mono- oder polycyclisches Ringssystem bilden können, das seinerseits gegebenenfalls substituiert sein kann,
- X: ein Halogenatom, insbesondere Chlor, ist,
- Q: ein C₄-C₂₄-Aryl-Ringsystem welches seinerseits durch R²⁰ substituiert sein kann, ein Heteroaryl die mit dem Cyclopentadienylring Azapentalene, Thiopentalen oder Phosphorpentalene bilden, welche ihrerseits durch R²⁰ substituiert sein können
- l, l': gleich oder verschieden eine ganze Zahl zwischen Null und 4, bevorzugt 1 oder 2, besonders bevorzugt gleich 1 sind,
- B: ein verbrückendes Strukturelement zwischen den beiden Indenylresten bezeichnet.

Beispiele für B sind Gruppen M³R¹³R¹⁴, worin M³ Silicium ist und R¹³ und R¹⁴ gleich oder verschieden eine C₁-C₂₀-kohlenwasserstoffhaltige Gruppe wie C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten. Besonders bevorzugte Gruppen für B sind Si(Me)₂, Si(Ph)₂, Si(MeEt), Si(PhMe), Si(PHEt), Si(Et)₂, worin Ph für substituiertes oder unsubstituiertes Phenyl und Et für Ethyl steht. B kann auch mit einem oder mehreren Resten R⁷ oder R⁸ ein mono- oder polycyclisches Ringsystem bilden.

Ganz besonders bevorzugt sind verbrückte Metallocenverbindungen der Formel (II),worin
- M: gleich Zirkonium ist,
- R³: gleich oder verschieden sind und ein Wasserstoffatom oder eine C₁-C₁₂-Alkylgruppe, bevorzugt eine Alkylgruppe wie Methyl, Ethyl, n-Butyl, n-Hexyl oder Octyl sind, besonders bevorzugt Methyl oder Ethyl ist,
- R⁵: gleich ein Wasserstoffatom ist,
- R⁴, R⁶: gleich Wasserstoffatome sind,
- R²⁰, R²¹: gleich oder verschieden sind und ein Wasserstoffatom, Halogenatom oder eine C₁-C₂₀ - kohlenstoffhaltige Gruppe bedeuten, bevorzugt eine lineare oder verzweigte C₁-C₈-Alkylgruppe, wie Methyl, Ethyl, tert.-Butyl, Cyclohexyl oder Octyl, C₂-C₆-Alkenyl, C₃-C₆-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₁₂-Arylalkyl, C₇-C₁₂-Alkylaryl, fluorhaltiges C₁-C₈-Alkyl, fluorhaltiges C₆-C₁₈-Aryl, fluorhaltiges C₇-C₁₂-Arylalkyl oder fluorhaltiges C₇₋C₁₂-Alkylaryl ist,
- X: Chlor ist,
- Q: ein C₄ -Aryl, welche mit dem Cyclopentadienylring ein Indenylsystem bilden, welches seinerseits durch R²⁰ substituiert sein kann, Heteroaryl die mit dem Cyclopentadienylring Azapentalene, Thiopentalen oder Phosphorpentalene bilden, welche ihrerseits durch R²⁰ substituiert sein können, ist,
- l, l': gleich oder verschieden eine ganze Zahl zwischen Null und 4, bevorzugt 1 oder 2, besonders bevorzugt gleich 1 ist,
- B: ein verbrückendes Strukturelement zwischen den beiden Indenylresten bezeichnet, wobei bevorzugt B gleich Si(Me)₂, Si(Ph)₂, Si(Et)₂, Si(MePh) ist.

Weiterer Gegenstand der Erfindung sind Ligandensysteme der Formel (IIa), in der die Reste die gleiche Bedeutung wie unter Formel (II) haben.

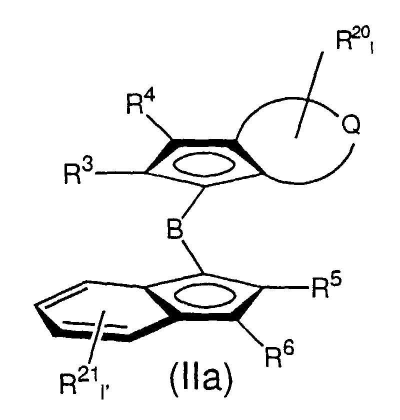

Die erfindungsgemäßen Metallocene der Formeln I und II zeichnen sich dadurch aus, daß sie im Vergleich zu den entsprechenden symmetrisch oder unsymmetrisch substituierten Metallocenen, die aber in Position 2 substituiert sind, ohne Wasserstoffzufuhr während der Polymerisation isotaktisches Polypropylen mit niedriger Molmasse (50000-300000 g/mol) liefern. Für Anwendungen, die feineingestellte Molmassen verlangen (definierter MFI) können wahlweise geringe Mengen Wasserstoff, zu den erfindungsgemäßen Metallocene der Formeln I und II, zugegeben werden.

Statt der reinen chiralen verbrückten Metallocenverbindungen der Formel (II) pseudo-(rac) können bei der Katalysatorherstellung auch Gemische aus den Metallocenen der Formel (II) und den entsprechenden pseudo-meso Metallocenen der Formel (IIb) zur Katalysatorherstellung eingesetzt werden.

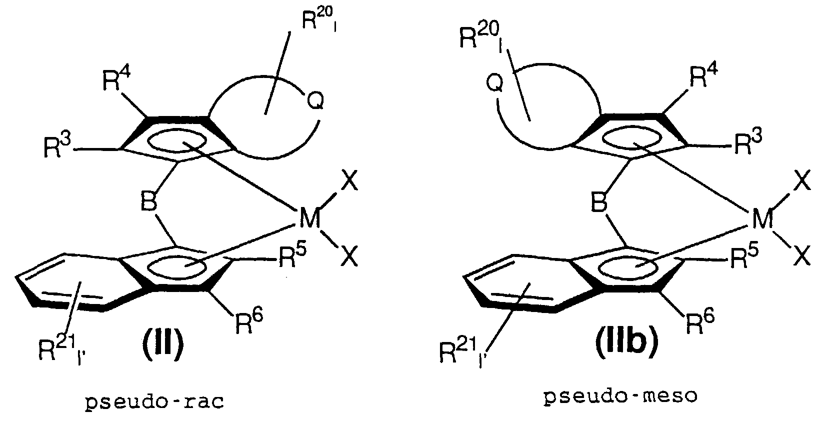

Erläuternde, jedoch nicht einschränkende Beispiele für die erfindungsgemäßen Metallocene sind:
Dimethylsilandiyl(2-methyl-4-(4'-tert.-butyl-phenyl)-indenyl)(1-indenyl)zirkonium-dichlorid
Dimethylsilandiyl(2-methyl-4-(4'-tert.-butyl-phenyl)-indenyl) (1-indenyl)hafnuim-dichlorid
Dimethylsilandiyl(2-methyl-4-(4'-tert.-butyl-phenyl)-indenyl) (1-indenyl)titandichlorid
Dimethylsilandiyl(2-methyl-4-(4'-methyl-phenyl)-indenyl)(1-indenyl)zirkoniumdichlorid
Dimethylsilandiyl(2-methyl-4-(4'-ethyl-phenyl)-indenyl)(1-indenyl)zirkoniumdichlorid
Dimethylsilandiyl(2-methyl-4-(4'-n-propyl-phenyl)-indenyl)(1-indenyl)zirkonium-dichlorid
Dimethylsilandiyl(2-methyl-4-(4'-iso-propyl-phenyl)-indenyl)(1-indenyl)zirkonium-dichlorid
Dimethylsilandiyl(2-methyl-4-(4'-n-butyl-phenyl)-indenyl)(1-indenyl)zirkoniumdichlorid
Dimethylsilandiyl(2-methyl-4-(4'-hexyl-phenyl)-indenyl)(1-indenyl)zirkoniumdichlorid
Dimethylsilandiyl(2-methyl-4-(4'-sec-butyl-phenyl)-indenyl)(1-indenyl)zirkonium-dichlorid
Dimethylsilandiyl(9-fluorenyl)-(1-indenyl)zirkoniumdichlorid,
Dimethylsilandiyl(9-(3-methyl)fluorenyl)-(1-indenyl)zirkonium-dichlorid
Dimethylsilandiyl(9-(2-tert.butyl)fluorenyl)-(1-indenyl) zirkoniumdichlorid
Dimethylsilandiyl(9-(2,7-di-tert.butyl)fluorenyl)(1-indenyl) zirkonium-dichlorid
Dimethylsilandiyl-(9-(2,7-diphenyl)fluorenyl)(1-indenyl)zirkoniumdichlorid
Dimethylsilandiyl(4-naphthyl-indenyl) (2-methyl-4-(4'-tert.-butyl-phenyl)-indenyl)-zirkoniumdichlorid
Dimethylsilandiyl(2-methyl-benzo-indenyl) (1-indenyl)zirkonium-dichlorid
Dimethylsilandiyl(2-methyl-indenyl) (1-indenyl)zirkoniumdichlorid
Dimethylsilandiyl(2-methyl-4-(1-naphthyl)-indenyl)-(1-indenyl) zirkoniumdichlorid
Dimethylsilandiyl(2-methyl-4-(2-naphthyl)(1-indenyl)zirkonium-dichlorid
Dimethylsilandiyl(2-methyl-4-t-butyl-indenyl) (1-indenyl) zirkoniumdichlorid
Dimethylsilandiyl(2-methyl-4-ethyl-indenyl) (1-indenyl)zirkonium-dichlorid
Dimethylsilandiyl(2-methyl-4- -acenaphth-indenyl) (1-indenyl) zirkoniumdichlorid
Dimethylsilandiyl(2-ethyl-indenyl) (1-indenyl)zirkoniumdichlorid
Dimethylsilandiyl(2-ethyl-4-ethyl-indenyl) (1-indenyl)zirkonium-dichlorid
Dimethylsilandiyl(2-ethyl-4-phenyl-indenyl) (1-indenyl)zirkonium-dichlorid
Dimethylsilandiyl(2-methyl-4-(tert-butyl-phenyl-indenyl)- (1-indenyl)zirkoniumdichlorid
Dimethylsilandiyl(2-methyl-4-(4-methyl-phenyl-indenyl) (1-indenyl)zirkoniumdichlorid
Dimethylsilandiyl(2-methyl-4-(4-ethyl-phenyl-indenyl) (1-indenyl)zirkoniumdichlorid
Dimethylsilandiyl(2-methyl-4-(4-trifluormethyl-phenyl-indenyl) (1-indenyl)zirkonium-dichlorid
Dimethylsilandiyl(2-methyl-4-(4-methoxy-phenyl-indenyl) (1-indenyl)zirkoniumdichlorid
Dimethylsilandiyl(2-ethyl-4-(4-tert-butyl-phenyl-indenyl) (1-indenyl)zirkoniumdichlorid
Dimethylsilandiyl(2-ethyl-4-(4-methyl-phenyl-indenyl) (1-indenyl)zirkoniumdichlorid
Dimethylsilandiyl(2-ethyl-4-(4-ethyl-phenyl-indenyl) (1-indenyl)zirkoniumdichlorid
Dimethylsilandiyl(2-ethyl-4-(4-trifluormethyl-phenyl-indenyl) (1-indenyl)zirkonium-dichlorid
Dimethylsilandiyl(2-ethyl-4-(4-methoxy-phenyl-indenyl) (1-indenyl)zirkoniumdichlorid
Dimethylsilandiyl(2-ethyl-4-(4-ethyl-phenyl-indenyl) (1-indenyl)zirkoniumdiethyl
Dimethylsilandiyl(2-methyl-4-(4'-hexyl-phenyl)-indenyl) (1-indenyl)zirkoniumdichlorid
Dimethylsilandiyl(2-methyl-4-(4'-sec-butyl-phenyl)-indenyl) (1-indenyl)zirkonium-dichlorid
Dimethylsilandiyl(2-ethyl-4-phenyl)-indenyl) (1-indenyl)zirkoniumdichlorid
Dimethylsilandiyl(2-ethyl-4-(4'-methyl-phenyl)-indenyl) (1-indenyl)zirkoniumdichlorid
Dimethylsilandiyl(2-ethyl-4-(4'-ethyl-phenyl)-indenyl) (1-indenyl)zirkoniumdichlorid
Dimethylsilandiyl(2-ethyl-4-(4'-n-propyl-phenyl)-indenyl) (1-indenyl)zirkonium-dichlorid
Dimethylsilandiyl(2-ethyl-4-(4'-iso-propyl-phenyl)-indenyl) (1-indenyl)zirkonium-dichlorid
Dimethylsilandiyl(2-ethyl-4-(4'-n-butyl-phenyl)-indenyl) (1-indenyl)zirkoniumdichlorid
Dimethylsilandiyl(2-ethyl-4-(4'-hexyl-phenyl)-indenyl) (1-indenyl)zirkoniumdichlorid
Dimethylsilandiyl(2-ethyl-4-(4'-pentyl-phenyl)-indenyl) (1-indenyl)zirkoniumdichlorid
Dimethylsilandiyl(2-ethyl-4-(4'-cyclohexyl-phenyl)-indenyl) (1-indenyl)zirkonium-dichlorid
Dimethylsilandiyl(2-ethyl-4-(4'-sec-butyl-phenyl)-indenyl) (1-indenyl)zirkonium-dichlorid
Dimethylsilandiyl(2-ethyl-4-(4'-tert.-butyl-phenyl)-indenyl) (1-indenyl)zirkonium-dichlorid
Dimethylsilandiyl(2-n-propyl-4-phenyl)-indenyl) (1-indenyl)zirkoniumdichlorid
Dimethylsilandiyl(2-n-propyl-4-(4'-methyl-phenyl)-indenyl) (1-indenyl)zirkonium-dichlorid
Dimethylsilandiyl(2-n-propyl-4-(4'-ethyl-phenyl)-indenyl) (1-indenyl)zirkonium-dichlorid
Dimethylsilandiyl(2-n-propyl-4-(4'-n-propyl-phenyl)-indenyl) (1-indenyl)zirkonium-dichlorid
Dimethylsilandiyl(2-n-propyl-4-(4'-iso-propyl-phenyl)-indenyl) (1-indenyl)zirkonium-dichlorid
Dimethylsilandiyl(2-n-propyl-4-(4'-n-butyl-phenyl)-indenyl) (1-indenyl)zirkonium-dichlorid
Dimethylsilandiyl(2-n-propyl-4-(4'-hexyl-phenyl)-indenyl) (1-indenyl)zirkonium-dichlorid
Dimethylsilandiyl(2-n-propyl-4-(4'-cyclohexyl-phenyl)-indenyl) (1-indenyl)zirkonium-dichlorid
Dimethylsilandiyl(2-n-propyl-4-(4'-sec-butyl-phenyl)-indenyl) (1-indenyl)zirkonium-dichlorid
Dimethylsilandiyl(2-n-propyl-4-(4'-tert.-butyl-phenyl)-indenyl) (1-indenyl)zirkonium-dichlorid
Dimethylsilandiyl(2-n-butyl-4-phenyl)-indenyl) (1-indenyl)zirkoniumdichlorid
Dimethylsilandiyl(2-n-butyl-4-(4'-methyl-phenyl)-indenyl) (1-indenyl)zirkonium-dichlorid
Dimethylsilandiyl(2-n-butyl-4-(4'-ethyl-phenyl)-indenyl) (1-indenyl)zirkoniumdichlorid
Dimethylsilandiyl(2-n-butyl-4-(4'-n-propyl-phenyl)-indenyl) (1-indenyl)zirkonium-dichlorid
Dimethylsilandiyl(2-n-butyl-4-(4'-iso-propyl-phenyl)-indenyl) (1-indenyl)zirkonium-dichlorid
Dimethylsilandiyl(2-n-butyl-4-(4'-n-butyl-phenyl)-indenyl) (1-indenyl)zirkonium-dichlorid
Dimethylsilandiyl(2-n-butyl-4-(4'-hexyl-phenyl)-indenyl) (1-indenyl)zirkoniumdichlorid
Dimethylsilandiyl(2-n-butyl-4-(4'-cyclohexyl-phenyl)-indenyl) (1-indenyl)zirkonium-dichlorid
Dimethylsilandiyl(2-n-butyl-4-(4'-sec-butyl-phenyl)-indenyl) (1-indenyl)zirkonium-dichlorid
Dimethylsilandiyl(2-n-butyl-4-(4'-tert.-butyl-phenyl)-indenyl) (1-indenyl)zirkonium-dichlorid
Dimethylsilandiyl(2-hexyl-4-phenyl)-indenyl) (1-indenyl) zirkoniumdichlorid
Dimethylsilandiyl(2-hexyl-4-(4'-methyl-phenyl)-indenyl) (1-indenyl)zirkoniumdichlorid
Dimethylsilandiyl(2-hexyl-4-(4'-ethyl-phenyl)-indenyl) (1-indenyl)zirkoniumdichlorid
Dimethylsilandiyl(2-hexyl-4-(4'-n-propyl-phenyl)-indenyl) (1-indenyl)zirkonium-dichlorid
Dimethylsilandiyl(2-hexyl-4-(4'-iso-propyl-phenyl)-indenyl) (1-indenyl)zirkonium-dichlorid
Dimethylsilandiyl(2-hexyl-4-(4'-n-butyl-phenyl)-indenyl) (1-indenyl)zirkoniumdichlorid
Dimethylsilandiyl(2-hexyl-4-(4'-hexyl-phenyl)-indenyl) (1-indenyl)zirkoniumdichlorid
Dimethylsilandiyl(2-hexyl-4-(4'-cyclohexyl-phenyl)-indenyl) (1-indenyl)zirkonium-dichlorid
Dimethylsilandiyl(2-hexyl-4-(4'-sec-butyl-phenyl)-indenyl) (1-indenyl)zirkonium-dichlorid
Dimethylsilandiyl(2-hexyl-4-(4'-tert.-butyl-phenyl)-indenyl) (1-indenyl)zirkonium-dichlorid
Dimethylsilandiyl(2-methyl-azapentalen) (1-indenyl)zirconium-dichlorid
Dimethylsilandiyl(2-methyl-thiapentalen) (1-indenyl)zirconium-dichlorid
Dimethylsilandiyl(2-methyl-phosphapentalen) (1-indenyl)zirconium-dichlorid
Dimethylsilandiyl(2- ethyl-azapentalen) (1-indenyl)zirconium-dichlorid
Dimethylsilandiyl(2-methyl-4-(4'-tert.-butyl-phenyl)-indenyl)(4-(4'-tert.-butyl-phenyl)-indenyl)zirkonium-dichlorid
Dimethylsilandiyl(2-methyl-4-(4'-tert.-butyl-phenyl)-indenyl) (4-(4'-tert.-butyl-phenyl)-indenyl)hafnuim-dichlorid
Dimethylsilandiyl(2-methyl-4-(4'-tert.-butyl-phenyl)-indenyl) (4-(4'-tert.-butyl-phenyl)-indenyl)titandichlorid
Dimethylsilandiyl(2-methyl-4-(4'-methyl-phenyl)-indenyl) (4-(4'-tert.-butyl-phenyl)-indenyl)zirkoniumdichlorid
Dimethylsilandiyl(2-methyl-4-(4'-ethyl-phenyl)-indenyl) (4-(4'-tert.-butyl-phenyl)-indenyl)zirkoniumdichlorid
Dimethylsilandiyl(2-methyl-4-(4'-n-propyl-phenyl)-indenyl) (4-(4'-tert.-butyl-phenyl)-indenyl)zirkoniumdichlorid
Dimethylsilandiyl(2-methyl-4-(4'-iso-propyl-phenyl)-indenyl) (4-(4'-tert.-butyl-phenyl)-indenyl)zirkoniumdichlorid
Dimethylsilandiyl(2-methyl-4-(4'-n-butyl-phenyl)-indenyl)(4-(4'-tert.-butyl-phenyl)-indenyl)zirkoniumdichlorid
Dimethylsilandiyl(2-methyl-4-(4'-hexyl-phenyl)-indenyl)(4-(4'-tert.-butyl-phenyl)-indenyl)zirkoniumdichlorid
Dimethylsilandiyl(2-methyl-4-(4'-sec-butyl-phenyl)-indenyl) (4-(4'-tert.-butyl-phenyl)-indenyl)zirkoniumdichlorid
Dimethylsilandiyl(4-naphthyl-indenyl) (2-methyl-4-(4'-tert.-butyl-phenyl)-indenyl)-zirkoniumdichlorid
Dimethylsilandiyl(2-methyl-benzo-indenyl) (4-(4'-tert.-butyl-phenyl)-indenyl)-zirkoniumdichlorid
Dimethylsilandiyl(2-methyl-indenyl) (4-(4'-tert.-butyl-phenyl)-indenyl)-zirkoniumdichlorid
Dimethylsilandiyl(2-methyl-4-(1-naphthyl)-indenyl) (4-(4'-tert.-butyl-phenyl)-indenyl)-zirkoniumdichlorid
Dimethylsilandiyl(2-methyl-4-(2-naphthyl)(4-(4'-tert.-butyl-phenyl)-indenyl)-zirkoniumdichlorid
Dimethylsilandiyl(2-methyl-4-t-butyl-indenyl) (4-(4'-tert.-butyl-phenyl)-indenyl)-zirkoniumdichlorid
Dimethylsilandiyl(2-methyl-4-ethyl-indenyl) (4-(4'-tert.-butyl-phenyl)-indenyl)-zirkoniumdichlorid
Dimethylsilandiyl(2-methyl-4- -acenaphth-indenyl) (4-(4'-tert.-butyl-phenyl)-indenyl)-zirkoniumdichlorid
Dimethylsilandiyl(2-ethyl-indenyl) (4-(4'-tert.-butyl-phenyl)-indenyl)zirkoniumdichlorid
Dimethylsilandiyl(2-ethyl-4-ethyl-indenyl) (4-(4'-tert.-butyl-phenyl)-indenyl)-zirkoniumdichlorid
Dimethylsilandiyl(2-ethyl-4-phenyl-indenyl) (4-(4'-tert.-butyl-phenyl)-indenyl)-zirkoniumdichlorid
Dimethylsilandiyl(2-methyl-4-(tert-butyl-phenyl-indenyl)-(4-(4'-tert.-butyl-phenyl)-indenyl)zirkoniumdichlorid
Dimethylsilandiyl(2-methyl-4-(4-methyl-phenyl-indenyl) (4-(4'-tert.-butyl-phenyl)-indenyl)zirkoniumdichlorid
Dimethylsilandiyl(2-methyl-4-(4-ethyl-phenyl-indenyl) (4-(4'-tert.-butyl-phenyl)-indenyl)zirkoniumdichlorid
Dimethylsilandiyl(2-methyl-4-(4-trifluormethyl-phenyl-indenyl) (4-(4'-tert.-butyl-phenyl)-indenyl)zirkoniumdichlorid
Dimethylsilandiyl(2-methyl-4-(4-methoxy-phenyl-indenyl) (4-(4'-tert.-butyl-phenyl)-indenyl)zirkoniumdichlorid
Dimethylsilandiyl(2-ethyl-4-(4-tert-butyl-phenyl-indenyl) (4-(4'-tert.-butyl-phenyl)-indenyl)zirkoniumdichlorid
Dimethylsilandiyl(2-ethyl-4-(4-methyl-phenyl-indenyl) (4-(4'-tert.-butyl-phenyl)-indenyl)zirkoniumdichlorid
Dimethylsilandiyl(2-ethyl-4-(4-ethyl-phenyl-indenyl) (4-(4'-tert.-butyl-phenyl)-indenyl)zirkoniumdichlorid
Dimethylsilandiyl(2-ethyl-4-(4-trifluormethyl-phenyl-indenyl) (4-(4'-tert.-butyl-phenyl)-indenyl)zirkonium-dichlorid
Dimethylsilandiyl(2-ethyl-4-(4-methoxy-phenyl-indenyl) (4-(4'-tert.-butyl-phenyl)-indenyl)zirkoniumdichlorid
Dimethylsilandiyl(2-ethyl-4-(4-ethyl-phenyl-indenyl) (4-(4'-tert.-butyl-phenyl)-indenyl)zirkoniumdiethyl
Dimethylsilandiyl(2-ethyl-4-phenyl)-indenyl) (4-(4'-tert.-butyl-phenyl)-indenyl)zirkoniumdichlorid
Dimethylsilandiyl(2-ethyl-4-(4'-methyl-phenyl)-indenyl) (4-(4'-tert.-butyl-phenyl)-indenyl)zirkoniumdichlorid
Dimethylsilandiyl(2-ethyl-4-(4'-ethyl-phenyl)-indenyl) (4-(4'-tert.-butyl-phenyl)-indenyl)zirkoniumdichlorid
Dimethylsilandiyl(2-ethyl-4-(4'-n-propyl-phenyl)-indenyl) (4-(4'-tert.-butyl-phenyl)-indenyl)zirkoniumdichlorid
Dimethylsilandiyl(2-ethyl-4-(4'-iso-propyl-phenyl)-indenyl) (4-(4'-tert.-butyl-phenyl)-indenyl)zirkoniumdichlorid
Dimethylsilandiyl(2-ethyl-4-(4'-n-butyl-phenyl)-indenyl) (4-(4'-tert.-butyl-phenyl)-indenyl)zirkoniumdichlorid
Dimethylsilandiyl(2-ethyl-4-(4'-hexyl-phenyl)-indenyl) (4-(4'-tert.-butyl-phenyl)-indenyl)zirkoniumdichlorid
Dimethylsilandiyl(2-ethyl-4-(4'-pentyl-phenyl)-indenyl) (4-(4'-tert.-butyl-phenyl)-indenyl)zirkoniumdichlorid
Dimethylsilandiyl(2-ethyl-4-(4'-cyclohexyl-phenyl)-indenyl) (4-(4'-tert.-butyl-phenyl)-indenyl)zirkoniumdichlorid
Dimethylsilandiyl(2-ethyl-4-(4'-sec-butyl-phenyl)-indenyl) (4-(4'-tert.-butyl-phenyl)-indenyl)zirkoniumdichlorid
Dimethylsilandiyl(2-ethyl-4-(4'-tert.-butyl-phenyl)-indenyl) (4-(4'-tert.-butyl-phenyl)-indenyl)zirkoniumdichlorid
Dimethylsilandiyl(2-n-propyl-4-phenyl)-indenyl) (4-(4'-tert.-butyl-phenyl)-indenyl)zirkoniumdichlorid
Dimethylsilandiyl(2-n-propyl-4-(4'-methyl-phenyl)-indenyl) (4-(4,-tert.-butyl-phenyl)-indenyl)zirkoniumdichlorid
Dimethylsilandiyl(2-n-propyl-4-(4'-ethyl-phenyl)-indenyl) (4-(4'-tert.-butyl-phenyl)-indenyl)zirkoniumdichlorid
Dimethylsilandiyl(2-n-propyl-4-(4'-n-propyl-phenyl)-indenyl) (4-(4'-tert.-butyl-phenyl)-indenyl)zirkonium-dichlorid
Dimethylsilandiyl(2-n-propyl-4-(4'-iso-propyl-phenyl)-indenyl) (4-(4'-tert.-butyl-phenyl)-indenyl)zirkonium-dichlorid
Dimethylsilandiyl(2-n-propyl-4-(4'-n-butyl-phenyl)-indenyl) (4-(4'-tert.-butyl-phenyl)-indenyl)zirkonium-dichlorid
Dimethylsilandiyl(2-n-propyl-4-(4'-hexyl-phenyl)-indenyl) (4-(4'-tert.-butyl-phenyl)-indenyl)zirkoniumdichlorid
Dimethylsilandiyl(2-n-propyl-4-(4'-cyclohexyl-phenyl)-indenyl) (4-(4'-tert.-butyl-phenyl)-indenyl)zirkonium-dichlorid
Dimethylsilandiyl(2-n-propyl-4-(4'-sec-butyl-phenyl)-indenyl) (4-(4'-tert.-butyl-phenyl)-indenyl)zirkonium-dichlorid
Dimethylsilandiyl(2-n-propyl-4-(4'-tert.-butyl-phenyl)-indenyl) (4-(4'-tert-butyl-phenyl)-indenyl)zirkonium-dichlorid
Dimethylsilandiyl(2-n-butyl-4-phenyl)-indenyl) (4-(4'-tert.-butyl-phenyl)-indenyl)zirkoniumdichlorid
Dimethylsilandiyl(2-n-butyl-4-(4'-methyl-phenyl)-indenyl) (4-(4'-tert.-butyl-phenyl)-indenyl)zirkoniumdichlorid
Dimethylsilandiyl(2-n-butyl-4-(4'-ethyl-phenyl)-indenyl) (4-(4'-tert.-butyl-phenyl)-indenyl)zirkoniumdichlorid
Dimethylsilandiyl(2-n-butyl-4-(4'-n-propyl-phenyl)-indenyl) (4-(4'-tert.-butyl-phenyl)-indenyl)zirkonium-dichlorid
Dimethylsilandiyl(2-n-butyl-4-(4'-iso-propyl-phenyl)-indenyl) (4-(4'-tert.-butyl-phenyl)-indenyl)zirkonium-dichlorid
Dimethylsilandiyl(2-n-butyl-4-(4'-n-butyl-phenyl)-indenyl) (4-(4'-tert.-butyl-phenyl)-indenyl)zirkoniumdichlorid
Dimethylsilandiyl(2-n-butyl-4-(4'-hexyl-phenyl)-indenyl) (4-(4'-tert.-butyl-phenyl)-indenyl)zirkoniumdichlorid
Dimethylsilandiyl(2-n-butyl-4-(4'-cyclohexyl-phenyl)-indenyl) (4-(4'-tert.-butyl-phenyl)-indenyl)zirkonium-dichlorid
Dimethylsilandiyl(2-n-butyl-4-(4'-sec-butyl-phenyl)-indenyl) (4-(4'-tert.-butyl-phenyl)-indenyl)zirkonium-dichlorid
Dimethylsilandiyl(2-n-butyl-4-(4'-tert.-butyl-phenyl)-indenyl) (4-(4'-tert.-butyl-phenyl)-indenyl)zirkonium-dichlorid
Dimethylsilandiyl(2-hexyl-4-phenyl)-indenyl) (4-(4'-tert.-butyl-phenyl)-indenyl)zirkoniumdichlorid
Dimethylsilandiyl(2-hexyl-4-(4'-methyl-phenyl)-indenyl) (4-(4'-tert.-butyl-phenyl)-indenyl)zirkoniumdichlorid
Dimethylsilandiyl(2-hexyl-4-(4'-ethyl-phenyl)-indenyl) (4-(4'-tert.-butyl-phenyl)-indenyl)zirkoniumdichlorid
Dimethylsilandiyl(2-hexyl-4-(4'-n-propyl-phenyl)-indenyl) (4-(4'-tert.-butyl-phenyl)-indenyl)zirkoniumdichlorid
Dimethylsilandiyl(2-hexyl-4-(4'-iso-propyl-phenyl)-indenyl) (4-(4'-tert.-butyl-phenyl)-indenyl)zirkonium-dichlorid
Dimethylsilandiyl(2-hexyl-4-(4'-n-butyl-phenyl)-indenyl) (4-(4'-tert.-butyl-phenyl)-indenyl)zirkoniumdichlorid
Dimethylsilandiyl(2-hexyl-4-(4'-hexyl-phenyl)-indenyl) (4-(4'-tert.-butyl-phenyl)-indenyl)zirkoniumdichlorid
Dimethylsilandiyl(2-hexyl-4-(4'-cyclohexyl-phenyl)-indenyl) (4-(4'-tert.-butyl-phenyl)-indenyl)zirkonium-dichlorid
Dimethylsilandiyl(2-hexyl-4-(4'-sec-butyl-phenyl)-indenyl) (4-(4'-tert.-butyl-phenyl)-indenyl)zirkoniumdichlorid
Dimethylsilandiyl(2-hexyl-4-(4'-tert.-butyl-phenyl)-indenyl) (4-(4'-tert.-butyl-phenyl)-indenyl)zirkoniumdichlorid
Dimethylsilandiyl(2-methyl-azapentalen) (4-(4'-tert.-butyl-phenyl)-indenyl)zirconium-dichlorid
Dimethylsilandiyl(2-methyl-thiapentalen) (4-(4'-tert.-butyl-phenyl)-indenyl)zirconium-dichlorid
Dimethylsilandiyl(2-methyl-phosphapentalen)(4-(4'-tert.-butyl-phenyl)-indenyl)-zirconiumdichlorid
Dimethylsilandiyl(2-ethyl-azapentalen) (4-(4'-tert.-butyl-phenyl)-indenyl)-zirconiumdichlorid
Dimethylsilandiyl(2-ethyl-thiapentalen) (4-(4'-tert.-butyl-phenyl)-indenyl) zirconiumdichlorid
Dimethylsilandiyl(2-ethyl-phosphapentalen) (4-(4'-tert.-butyl-phenyl)-indenyl) zirconiumdichlorid
Dimethylsilandiyl(2-methyl-4-(4'-tert.-butyl-phenyl)-indenyl)(4-phenyl)-indenyl-zirkoniumdichlorid
Dimethylsilandiyl(2-methyl-4-(4'-tert.-butyl-phenyl)-indenyl) (4-phenyl)-indenyl-hafnuimdichlorid
Dimethylsilandiyl(2-methyl-4-(4'-tert.-butyl-phenyl)-indenyl) (4-phenyl)-indenyl-titandichlorid
Dimethylsilandiyl(2-methyl-4-(4'-methyl-phenyl)-indenyl)(4-phenyl)-indenyl-zirkoniumdichlorid
Dimethylsilandiyl(2-methyl-4-(4'-ethyl-phenyl)-indenyl)(4-phenyl)-indenyl-zirkoniumdichlorid
Dimethylsilandiyl(2-methyl-4-(4'-n-propyl-phenyl)-indenyl)(4-phenyl)-indenyl)zirkonium-dichlorid
Dimethylsilandiyl(2-methyl-4-(4'-iso-propyl-phenyl)-indenyl)(4-phenyl)-indenyl-zirkoniumdichlorid
Dimethylsilandiyl(2-methyl-4-(4'-n-butyl-phenyl)-indenyl)(4-phenyl)-indenyl-zirkoniumdichlorid
Dimethylsilandiyl(2-methyl-4-(4'-hexyl-phenyl)-indenyl)(4-phenyl)-indenyl)zirkonium-dichlorid
Dimethylsilandiyl(2-methyl-4-(4'-sec-butyl-phenyl)-indenyl) (4-phenyl)-indenyl-zirkoniumdichlorid
Dimethylsilandiyl (9-fluorenyl)-(4-phenyl)-indenyl)zirkonium-dichlorid,
Dimethylsilandiyl(9-(2,7-di-tert.butyl)fluorenyl)- (4-phenyl)-indenyl-zirkoniumdichlorid.
Dimethylsilandiyl(2-methyl-benzo-indenyl) (4-phenyl)-indenyl) zirkoniumdichlorid
Dimethylsilandiyl(2-methyl-indenyl) (4-phenyl)-indenyl)zirkonium-dichlorid
Dimethylsilandiyl(2-methyl-4-(1-naphthyl)-indenyl) (4-phenyl)-indenyl)zirkonium-dichlorid
Dimethylsilandiyl(2-methyl-4-(2-naphthyl)(4-phenyl)-indenyl) zirkoniumdichlorid
Dimethylsilandiyl(2-methyl-4-t-butyl-indenyl) (4-phenyl)-indenyl)zirkoniumdichlorid
Dimethylsilandiyl(2-methyl-4-ethyl-indenyl) (4-phenyl)-indenyl)zirkoniumdichlorid
Dimethylsilandiyl(2-methyl-4- -acenaphth-indenyl) (4-phenyl)-indenyl)zirkonium-dichlorid
Dimethylsilandiyl(2-ethyl-indenyl) (4-phenyl)-indenyl)zirkonium-dichlorid
Dimethylsilandiyl(2-ethyl-4-ethyl-indenyl) (4-phenyl)-indenyl)zirkoniumdichlorid
Dimethylsilandiyl(2-ethyl-4-phenyl-indenyl) (4-phenyl)-indenyl)zirkoniumdichlorid
Dimethylsilandiyl(2-methyl-4-(tert-butyl-phenyl-indenyl)-(4-phenyl)-indenyl)zirkonium-dichlorid
Dimethylsilandiyl(2-methyl-4-(4-methyl-phenyl-indenyl) (4-phenyl)-indenyl)zirkonium-dichlorid
Dimethylsilandiyl(2-methyl-4-(4-ethyl-phenyl-indenyl) (4-phenyl)-indenyl)zirkonium-dichlorid
Dimethylsilandiyl(2-methyl-4-(4-trifluormethyl-phenyl-indenyl) (4-phenyl)-indenyl-zirkoniumdichlorid
Dimethylsilandiyl(2-methyl-4-(4-methoxy-phenyl-indenyl) (4-phenyl)-indenyl)zirkonium-dichlorid
Dimethylsilandiyl(2-ethyl-4-(4-tert-butyl-phenyl-indenyl) (4-phenyl)-indenyl)zirkonium-dichlorid
Dimethylsilandiyl(2-ethyl-4-(4-methyl-phenyl-indenyl) (4-phenyl)-indenyl)zirkonium-dichlorid
Dimethylsilandiyl(2-ethyl-4-(4-ethyl-phenyl-indenyl) (4-phenyl)-indenyl)zirkonium-dichlorid
Dimethylsilandiyl(2-ethyl-4-(4-trifluormethyl-phenyl-indenyl) (4-phenyl)-indenyl-zirkoniumdichlorid
Dimethylsilandiyl(2-ethyl-4-(4-methoxy-phenyl-indenyl) (4-phenyl)-indenyl)zirkonium-dichlorid Dimethylsilandiyl(2-ethyl-4-phenyl)-indenyl) (4-phenyl)-indenyl)zirkoniumdichlorid
Dimethylsilandiyl(2-ethyl-4-(4'-methyl-phenyl)-indenyl) (4-phenyl)-indenyl)zirkonium-dichlorid
Dimethylsilandiyl(2-ethyl-4-(4'-ethyl-phenyl)-indenyl) (4-phenyl)-indenyl)zirkonium-dichlorid
Dimethylsilandiyl(2-ethyl-4-(4'-n-propyl-phenyl)-indenyl) (4-phenyl)-indenyl)zirkonium-dichlorid
Dimethylsilandiyl(2-ethyl-4-(4'-iso-propyl-phenyl)-indenyl) (4-phenyl)-indenyl-zirkoniumdichlorid
Dimethylsilandiyl(2-ethyl-4-(4'-n-butyl-phenyl)-indenyl) (4-phenyl)-indenyl)zirkonium-dichlorid
Dimethylsilandiyl(2-ethyl-4-(4'-hexyl-phenyl)-indenyl) (4-phenyl)-indenyl)zirkonium-dichlorid
Dimethylsilandiyl(2-ethyl-4-(4'-pentyl-phenyl)-indenyl) (4-phenyl)-indenyl)zirkonium-dichlorid
Dimethylsilandiyl(2-ethyl-4-(4'-cyclohexyl-phenyl)-indenyl) (4-phenyl)-indenyl-zirkoniumdichlorid
Dimethylsilandiyl(2-ethyl-4-(4'-sec-butyl-phenyl)-indenyl) (4-phenyl)-indenyl-zirkoniumdichlorid
Dimethylsilandiyl(2-ethyl-4-(4'-tert.-butyl-phenyl)-indenyl) (4-phenyl)-indenyl)zirkonium-dichlorid
Dimethylsilandiyl(2-n-propyl-4-phenyl)-indenyl) (4-phenyl)-indenyl)zirkoniumdichlorid
Dimethylsilandiyl(2-n-propyl-4-(4'-methyl-phenyl)-indenyl) (4-phenyl)-indenyl-zirkoniumdichlorid
Dimethylsilandiyl(2-n-propyl-4-(4'-ethyl-phenyl)-indenyl) (4-phenyl)-indenyl-zirkoniumdichlorid
Dimethylsilandiyl(2-n-propyl-4-(4'-n-propyl-phenyl)-indenyl) (4-phenyl)-indenyl-zirkoniumdichlorid
Dimethylsilandiyl(2-n-propyl-4-(4'-iso-propyl-phenyl)-indenyl) (4-phenyl)-indenyl-zirkoniumdichlorid
Dimethylsilandiyl(2-n-propyl-4-(4'-n-butyl-phenyl)-indenyl) (4-phenyl)-indenyl-zirkoniumdichlorid
Dimethylsilandiyl(2-n-propyl-4-(4'-hexyl-phenyl)-indenyl) (4-phenyl)-indenyl-zirkoniumdichlorid
Dimethylsilandiyl(2-n-propyl-4-(4'-cyclohexyl-phenyl)-indenyl) (4-phenyl)-indenyl-zirkoniumdichlorid
Dimethylsilandiyl(2-n-propyl-4-(4'-sec-butyl-phenyl)-indenyl) (4-phenyl)-indenyl-zirkoniumdichlorid
Dimethylsilandiyl(2-n-propyl-4-(4'-tert-butyl-phenyl)-indenyl) (4-phenyl)-indenyl-zirkoniumdichlorid
Dimethylsilandiyl(2-n-butyl-4-phenyl)-indenyl) (4-phenyl)-indenyl)zirkoniumdichlorid
Dimethylsilandiyl(2-n-butyl-4-(4'-methyl-phenyl)-indenyl) (4-phenyl)-indenyl)zirkonium-dichlorid
Dimethylsilandiyl(2-n-butyl-4-(4'-ethyl-phenyl)-indenyl) (4-phenyl)-indenyl)zirkonium-dichlorid
Dimethylsilandiyl(2-n-butyl-4-(4'-n-propyl-phenyl)-indenyl) (4-phenyl)-indenyl-zirkoniumdichlorid
Dimethylsilandiyl(2-n-butyl-4-(4'-iso-propyl-phenyl)-indenyl) (4-phenyl)-indenyl-zirkoniumdichlorid
Dimethylsilandiyl(2-n-butyl-4-(4'-n-butyl-phenyl)-indenyl) (4-phenyl)-indenyl-zirkoniumdichlorid
Dimethylsilandiyl(2-n-butyl-4-(4'-hexyl-phenyl)-indenyl) (4-phenyl)-indenyl)zirkonium-dichlorid
Dimethylsilandiyl(2-n-butyl-4-(4'-cyclohexyl-phenyl)-indenyl) (4-phenyl)-indenyl-zirkoniumdichlorid
Dimethylsilandiyl(2-n-butyl-4-(4'-sec-butyl-phenyl)-indenyl) (4-phenyl)-indenyl-zirkoniumdichlorid
Dimethylsilandiyl(2-n-butyl-4-(4'-tert-butyl-phenyl)-indenyl) (4-phenyl)-indenyl-zirkoniumdichlorid
Dimethylsilandiyl(2-hexyl-4-phenyl)-indenyl)(4-phenyl)-indenyl)zirkoniumdichlorid
Dimethylsilandiyl(2-hexyl-4-(4'-methyl-phenyl)-indenyl) (4-phenyl)-indenyl)zirkonium-dichlorid
Dimethylsilandiyl(2-hexyl-4-(4'-ethyl-phenyl)-indenyl) (4-phenyl)-indenyl)zirkonium-dichlorid
Dimethylsilandiyl(2-hexyl-4-(4'-n-propyl-phenyl)-indenyl) (4-phenyl)-indenyl)zirkonium-dichlorid
Dimethylsilandiyl(2-hexyl-4-(4'-iso-propyl-phenyl)-indenyl) (4-phenyl)-indenyl-zirkoniumdichlorid
Dimethylsilandiyl(2-hexyl-4-(4'-n-butyl-phenyl)-indenyl) (4-phenyl)-indenyl)zirkonium-dichlorid
Dimethylsilandiyl(2-hexyl-4-(4'-hexyl-phenyl)-indenyl) (4-phenyl)-indenyl)zirkonium-dichlorid
Dimethylsilandiyl(2-hexyl-4-(4'-cyclohexyl-phenyl)-indenyl) (4-phenyl)-indenyl-zirkoniumdichlorid
Dimethylsilandiyl(2-hexyl-4-(4'-sec-butyl-phenyl)-indenyl) (4-phenyl)-indenyl)zirkonium-dichlorid
Dimethylsilandiyl(2-hexyl-4-(4'-tert.-butyl-phenyl)-indenyl) (4-phenyl)-indenyl-zirkoniumdichlorid
Dimethylsilandiyl(2-methyl-azapentalen) (4-phenyl)-indenyl zirconiumdichlorid
Dimethylsilandiyl(2-methyl-thiapentalen) (4-phenyl)-indenyl zirconiumdichlorid
Dimethylsilandiyl(2-methyl-phosphapentalen) (4-phenyl)-indenyl zirconiumdichlorid
Dimethylsilandiyl(2- ethyl-azapentalen) (4-phenyl)-indenyl zirconiumdichlorid
Dimethylsilandiyl(2-ethyl-thiapentalen) (4-phenyl)-indenyl zirconiumdichlorid
Dimethylsilandiyl(2-ethyl-phosphapentalen) (4-phenyl)-indenyl zirconiumdichlorid
Dimethylsilandiyl(2-methyl-4-(4'-tert.-butyl-phenyl)-indenyl) (4,5-benzo-1-indenyl)zirkonium-dichlorid
Dimethylsilandiyl(2-methyl-4-(4'-tert.-butyl-phenyl)-indenyl) (4,5-benzo-1-indenyl)hafnuim-dichlorid
Dimethylsilandiyl(2-methyl-4-(4'-tert.-butyl-phenyl)-indenyl) (4,5-benzo-1-indenyl)titandichlorid
Dimethylsilandiyl(2-methyl-4-(4'-methyl-phenyl)-indenyl) (4,5-benzo-1-indenyl)zirkoniumdichlorid
Dimethylsilandiyl(2-methyl-4-(4'-ethyl-phenyl)-indenyl) (4,5-benzo-1-indenyl)zirkoniumdichlorid
Dimethylsilandiyl(2-methyl-4-(4'-n-propyl-phenyl)-indenyl) (4,5-benzo-1-indenyl)zirkonium-dichlorid
Dimethylsilandiyl(2-methyl-4-(4'-iso-propyl-phenyl)-indenyl) (4,5-benzo-1-indenyl)zirkonium-dichlorid
Dimethylsilandiyl(2-methyl-4-(4'-n-butyl-phenyl)-indenyl) (4,5-benzo-1-indenyl)zirkoniumdichlorid
Dimethylsilandiyl(2-methyl-4-(4'-hexyl-phenyl)-indenyl) (4,5-benzo-1-indenyl)zirkoniumdichlorid
Dimethylsilandiyl(2-methyl-4-(4'-sec-butyl-phenyl)-indenyl) (4,5-benzo-1-indenyl)zirkonium-dichlorid
Dimethylsilandiyl (9-fluorenyl)-(4,5-benzo-1-indenyl)zirkonium-dichlorid,
Dimethylsilandiyl(9-(2,7-di-tert.butyl)fluorenyl)-4,5-benzo-1-indenyl)zirkonium-dichlorid.
Dimethylsilandiyl(4-naphthyl-indenyl) (2-methyl-4-(4'-tert.-butyl-phenyl)-indenyl)-zirkoniumdichlorid
Dimethylsilandiyl(2-methyl-benzo-indenyl) (4,5-benzo-1-indenyl) zirkoniumdichlorid
Dimethylsilandiyl(2-methyl-indenyl)(4,5-benzo-1-indenyl) zirkoniumdichlorid
Dimethylsilandiyl(2-methyl-4-(1-naphthyl)-indenyl) (4,5-benzo-1-indenyl)zirkoniumdichlorid
Dimethylsilandiyl(2-methyl-4-(2-naphthyl)(4,5-benzo-1-indenyl) zirkoniumdichlorid
Dimethylsilandiyl(2-methyl-4-t-butyl-indenyl) (4,5-benzo-1-indenyl)zirkoniumdichlorid
Dimethylsilandiyl(2-methyl-4-ethyl-indenyl) (4,5-benzo-1-indenyl)zirkoniumdichlorid
Dimethylsilandiyl(2-methyl-4- -acenaphth-indenyl) (4,5-benzo-1-indenyl)zirkoniumdichlorid
Dimethylsilandiyl(2-ethyl-indenyl) (4,5-benzo-1-indenyl) zirkoniumdichlorid
Dimethylsilandiyl(2-ethyl-4-ethyl-indenyl) (4,5-benzo-1-indenyl) zirkoniumdichlorid
Dimethylsilandiyl(2-ethyl-4-phenyl-indenyl) (4,5-benzo-1-indenyl) zirkoniumdichlorid
Dimethylsilandiyl(2-methyl-4-(tert-butyl-phenyl-indenyl)-(4,5-benzo-1-indenyl)zirkoniumdichlorid
Dimethylsilandiyl(2-methyl-4-(4-methyl-phenyl-indenyl) (4,5-benzo-1-indenyl)zirkoniumdichlorid
Dimethylsilandiyl(2-methyl-4-(4-ethyl-phenyl-indenyl) (4,5-benzo-1-indenyl)zirkoniumdichlorid
Dimethylsilandiyl(2-methyl-4-(4-trifluormethyl-phenyl-indenyl) (4,5-benzo-1-indenyl)zirkonium-dichlorid
Dimethylsilandiyl(2-methyl-4-(4-methoxy-phenyl-indenyl) (4,5-benzo-1-indenyl)zirkoniumdichlorid.
Dimethylsilandiyl(2-ethyl-4-(4-tert-butyl-phenyl-indenyl) (4,5-benzo-1-indenyl)zirkoniumdichlorid
Dimethylsilandiyl(2-ethyl-4-(4-methyl-phenyl-indenyl) (4,5-benzo-1-indenyl)zirkoniumdichlorid
Dimethylsilandiyl(2-ethyl-4-(4-ethyl-phenyl-indenyl) (4,5-benzo-1-indenyl)zirkoniumdichlorid
Dimethylsilandiyl(2-ethyl-4-(4-trifluormethyl-phenyl-indenyl) (4,5-benzo-1-indenyl)zirkonium-dichlorid
Dimethylsilandiyl(2-ethyl-4-(4-methoxy-phenyl-indenyl) (4,5-benzo-1-indenyl)zirkoniumdichlorid
Dimethylsilandiyl(2-methyl-4-(4'-hexyl-phenyl)-indenyl) (4,5-benzo-1-indenyl)zirkoniumdichlorid
Dimethylsilandiyl(2-methyl-4-(4'-sec-butyl-phenyl)-indenyl) (4,5-benzo-1-indenyl)zirkonium-dichlorid
Dimethylsilandiyl(2-ethyl-4-phenyl)-indenyl) (4,5-benzo-1-indenyl)zirkoniumdichlorid
Dimethylsilandiyl(2-ethyl-4-(4'-methyl-phenyl)-indenyl) (4,5-benzo-1-indenyl)zirkoniumdichlorid
Dimethylsilandiyl(2-ethyl-4-(4'-ethyl-phenyl)-indenyl) (4,5-benzo-1-indenyl)zirkoniumdichlorid
Dimethylsilandiyl(2-ethyl-4-(4'-n-propyl-phenyl)-indenyl) (4,5-benzo-1-indenyl)zirkoniumdichlorid
Dimethylsilandiyl(2-ethyl-4-(4'-iso-propyl-phenyl)-indenyl) (4,5-benzo-1-indenyl)zirkonium-dichlorid
Dimethylsilandiyl(2-ethyl-4-(4'-n-butyl-phenyl)-indenyl) (4,5-benzo-1-indenyl)zirkoniumdichlorid
Dimethylsilandiyl(2-ethyl-4-(4'-hexyl-phenyl)-indenyl) (4,5-benzo-1-indenyl)zirkoniumdichlorid
Dimethylsilandiyl(2-ethyl-4-(4'-pentyl-phenyl)-indenyl) (4,5-benzo-1-indenyl)zirkoniumdichlorid
Dimethylsilandiyl(2-ethyl-4-(4'-cyclohexyl-phenyl)-indenyl) (4,5-benzo-1-indenyl)zirkonium-dichlorid
Dimethylsilandiyl(2-ethyl-4-(4'-sec-butyl-phenyl)-indenyl) (4,5-benzo-1-indenyl)zirkoniumdichlorid
Dimethylsilandiyl(2-ethyl-4-(4'-tert.-butyl-phenyl)-indenyl) (4,5-benzo-1-indenyl)zirkonium-dichlorid
Dimethylsilandiyl(2-n-propyl-4-phenyl)-indenyl) (4,5-benzo-1-indenyl)zirkoniumdichlorid
Dimethylsilandiyl(2-n-propyl-4-(4'-methyl-phenyl)-indenyl) (4'5-benzo-1-indenyl)zirkonium-dichlorid
Dimethylsilandiyl(2-n-propyl-4-(4'-ethyl-phenyl)-indenyl) (4,5-benzo-1-indenyl)zirkoniumdichlorid
Dimethylsilandiyl(2-n-propyl-4-(4'-n-propyl-phenyl)-indenyl) (4,5-benzo-1-indenyl)zirkonium-dichlorid
Dimethylsilandiyl(2-n-propyl-4-(4'-iso-propyl-phenyl)-indenyl) (4,5-benzo-1-indenyl)zirkonium-dichlorid
Dimethylsilandiyl(2-n-propyl-4-(4'-n-butyl-phenyl)-indenyl) (4,5-benzo-1-indenyl)zirkonium-dichlorid
Dimethylsilandiyl(2-n-propyl-4-(4'-hexyl-phenyl)-indenyl) (4,5-benzo-1-indenyl)zirkoniumdichlorid
Dimethylsilandiyl(2-n-propyl-4-(4'-cyclohexyl-phenyl)-indenyl) (4,5-benzo-1-indenyl)zirkonium-dichlorid
Dimethylsilandiyl(2-n-propyl-4-(4'-sec-butyl-phenyl)-indenyl) (4,5-benzo-1-indenyl)zirkonium-dichlorid
Dimethylsilandiyl(2-n-propyl-4-(4'-tert.-butyl-phenyl)-indenyl) (4,5-benzo-1-indenyl)zirkonium-dichlorid
Dimethylsilandiyl(2-n-butyl-4-phenyl)-indenyl) (4,5-benzo-1-indenyl)zirkoniumdichlorid
Dimethylsilandiyl(2-n-butyl-4-(4'-methyl-phenyl)-indenyl) (4,5-benzo-1-indenyl)zirkoniumdichlorid
Dimethylsilandiyl(2-n-butyl-4-(4'-ethyl-phenyl)-indenyl) (4,5-benzo-1-indenyl)zirkoniumdichlorid
Dimethylsilandiyl(2-n-butyl-4-(4'-n-propyl-phenyl)-indenyl) (4,5-benzo-1-indenyl)zirkonium-dichlorid
Dimethylsilandiyl(2-n-butyl-4-(4'-iso-propyl-phenyl)-indenyl) (4,5-benzo-1-indenyl)zirkonium-dichlorid
Dimethylsilandiyl(2-n-butyl-4-(4'-n-butyl-phenyl)-indenyl) (4,5-benzo-1-indenyl)zirkoniumdichlorid
Dimethylsilandiyl(2-n-butyl-4-(4'-hexyl-phenyl)-indenyl) (4,5-benzo-1-indenyl)zirkoniumdichlorid
Dimethylsilandiyl(2-n-butyl-4-(4'-cyclohexyl-phenyl)-indenyl) (4,5-benzo-1-indenyl)zirkonium-dichlorid
Dimethylsilandiyl(2-n-butyl-4-(4'-sec-butyl-phenyl)-indenyl) (4,5-benzo-1-indenyl)zirkonium-dichlorid
Dimethylsilandiyl(2-n-butyl-4-(4'-tert.-butyl-phenyl)-indenyl) (4,5-benzo-1-indenyl)zirkonium-dichlorid
Dimethylsilandiyl(2-hexyl-4-phenyl)-indenyl) (4,5-benzo-1-indenyl)zirkoniumdichlorid
Dimethylsilandiyl(2-hexyl-4-(4'-methyl-phenyl)-indenyl) (4,5-benzo-1-indenyl)zirkoniumdichlorid
Dimethylsilandiyl(2-hexyl-4-(4'-ethyl-phenyl)-indenyl) (4,5-benzo-1-indenyl)zirkoniumdichlorid.
Dimethylsilandiyl(2-hexyl-4-(4'-n-propyl-phenyl)-indenyl) (4,5-benzo-1-indenyl)zirkoniumdichlorid
Dimethylsilandiyl(2-hexyl-4-(4'-iso-propyl-phenyl)-indenyl) (4,5-benzo-1-indenyl)zirkonium-dichlorid
Dimethylsilandiyl(2-hexyl-4-(4'-n-butyl-phenyl)-indenyl) (4,5-benzo-1-indenyl)zirkoniumdichlorid
Dimethylsilandiyl(2-hexyl-4-(4'-hexyl-phenyl)-indenyl) (4,5-benzo-1-indenyl)zirkoniumdichlorid
Dimethylsilandiyl(2-hexyl-4-(4'-cyclohexyl-phenyl)-indenyl) (4,5-benzo-1-indenyl)zirkonium-dichlorid
Dimethylsilandiyl(2-hexyl-4-(4'-sec-butyl-phenyl)-indenyl) (4,5-benzo-1-indenyl)zirkonium-dichlorid
Dimethylsilandiyl(2-hexyl-4-(4'-tert.-butyl-phenyl)-indenyl) (4,5-benzo-1-indenyl)zirkonium-dichlorid
Dimethylsilandiyl(2-methyl-azapentalen) (4,5-benzo-1-indenyl) zirconiumdichlorid
Dimethylsilandiyl(2-methyl-thiapentalen) (4,5-benzo-1-indenyl)zirconiumdichlorid
Dimethylsilandiyl(2-methyl-phosphapentalen) (4,5-benzo-1-indenyl)zirconiumdichlorid
Dimethylsilandiyl(2- ethyl-azapentalen) (4,5-benzo-1-indenyl)zirconiumdichlorid

Weiterhin bevorzugt sind die entsprechenden Zirkondimethyl-Verbindungen, die entsprechenden Zirkon-η⁴-Butadien-Verbindungen, sowie die entsprechenden Verbindungen mit Si(Ph)₂-, Si(MeEt)-, Si(PhMe)-, Si(PHEt)- und Si(Et)₂- Brücke.

Die erfindungsgemäßen Metallocene der Formeln I und II sind hochaktive Katalysatorkomponenten für die Olefinpolymerisation. Je nach Substitutionsmuster der Liganden können die Metallocene als Isomerengemisch anfallen. Die Metallocene werden für die Polymerisation bevorzugt isomerenrein eingesetzt.

Bevorzugt werden die rac isomeren Metallocene der Formel II eingesetzt.

Die erfindungsgemäßen Metallocene der Formeln I und II eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält. Unter dem Begriff Polymerisation wird ein Homopolymerisation wie auch eine Copolymerisation verstanden.

Die erfindungsgemäßen Metallocene der Formeln I und II, insbesondere der Formel II, können zur Polymerisation eines oder mehrerer Olefine der Formel R^{a}-CH=CH-R^{b} verwendet werden, worin R^{a} und R^{b} gleich oder verschieden sind und ein Wasserstoffatom oder einen Kohlenwasserstoff mit 1 bis 20 C-Atomen, insbesondere 1 bis 10 C-Atomen, bedeuten, und R^{a} und R^{b} zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen. Bevorzugt werden Ethylen oder Propylen homopolymerisiert, oder Ethylen mit einem oder mehreren cyclischen Olefinen, wie Norbornen , und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/1,4-Heydien-Copolymere. Besonders bevorzugt ist die Polymerisation von Propylen zu isotaktischem Polypropylen mit niedriger Molmasse von 50000-300000, ganz besonders bevorzugt sind Molmassen zwischen 70000-200000.

Die Polymerisation wird bei einer Temperatur von - 60 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasen- und Lösungspolymerisation.

Bevorzugt enthält der eingesetzte Katalysator eine der erfindungsgemäßen Metallocenverbindungen. Es können auch Mischungen zweier oder mehrerer Metallocenverbindungen eingesetzt werden, z. B. zur Herstellung von Polyolefinen mit breiter oder multimodaler Molmassenverteilung.

Der Cokatalysator, der zusammen mit einem erfindungsgemäßen Metallocen der Formeln I und II das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.
Als Aluminoxan wird bevorzugt eine Verbindung der allgemeinen Formel (III)

(R AlO)ₙ (III)

verwendet.

Weitere geeignete Aluminoxane können z.B. cyclisch wie in Formel (IV) 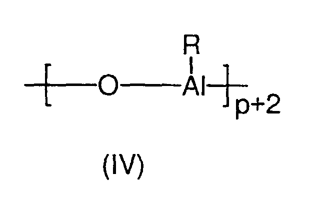 oder linear wie in Formel (V) 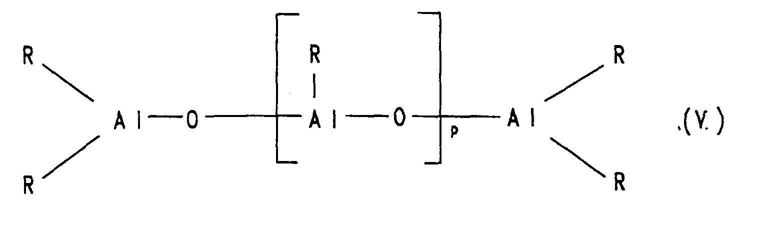 oder vom Cluster-Typ wie in Formel (VI) 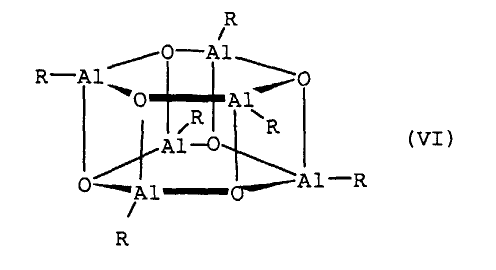 sein. Derartige Aluminoxane werden beispielsweise in JACS 117 (1995), 6465-74, Organometallics 13 (1994), 2957-2969, beschrieben.

Die Reste R in den Formeln (III), (IV), (V) und (VI) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl. Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,
Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.
Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆⁻, CF₃SO₃⁻ oder ClO₄⁻. Als kationische Gegenionen werden protonierte Lewis-Basen wie z.B. Methylamin, Anilin, N, N-Dimethylbenzylamin sowie Derivate, N, N-Dimethylcyclohexylamin sowie Derivate, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder Triphenylcarbenium eingesetzt.
Beispiele für solche ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
N,N-Dimethylcyclohexylammoniumtetrakis(pentafluorophenyl)borat
N,N-Dimethylbenzylammoniumtetrakis(pentafluorophenyl)borat
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder

N,N-Dimethylaniliniumtetrakis(pentafluorophenyl)borat.
Es können auch Gemische mindestens einer Lewis-Säure und mindestens einer ionischen Verbindung eingesetzt werden.
Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat) cobaltate(III),
Tri(butyl)ammoniumbis(undecahydrid-7,8-dicarbaundecaborat) ferrat(III)
von Bedeutung.

Als Cokatalysatorsysteme sind ebenfalls Kombinationen aus mindestens einem der oben genannten Amine und einem Träger mit elementorganischen Verbindungen wie sie im Patent WO 99/40129 beschrieben sind, von Bedeutung.

Bevorzugte Bestandteil dieser Cokatalysatorsysteme sind die Verbindungen der Formeln (A) und (B), 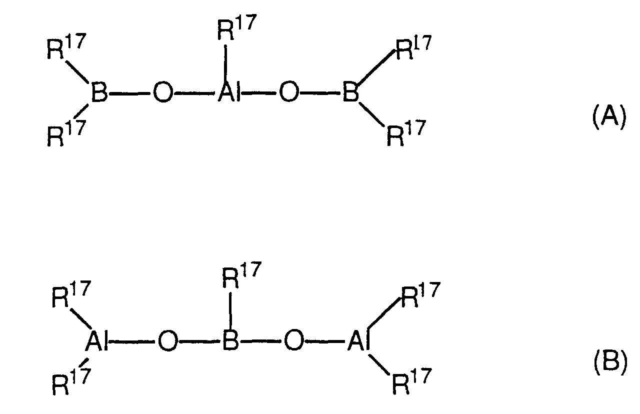 worin
- R¹⁷: ein Wasserstoffatom, ein Halogenatom, eine C₁-C₄₀-kohlenstoffhaltige Gruppe, insbesondere C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl oder C₇-C₄₀-Halogenalkylaryl. R¹⁷ kann auch eine - OSiR₃-Gruppe sein, worin R gleich oder verschieden sind und die gleiche Bedeutung wie R¹⁷ haben.

Als weiterer bevorzugter Cokatalysator sind darüber hinaus allgemein Verbindungen anzusehen, die durch die Umsetzung mindestens einer Verbindung der Formel (C) und/oder (D) und/oder (E) mit mindestens einer Verbindung der Formel (F) entstehen.

R¹⁷_{f}B-(DR⁷)_{g} (C)

R¹⁷₂B-X-BR¹⁷₂ (D)

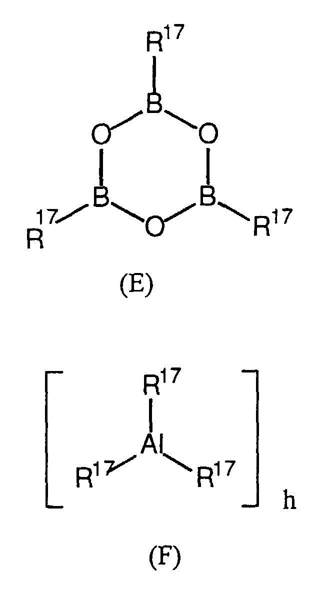

worin
- R⁷: ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann und worin
- R¹⁷: die gleiche Bedeutung wie vorstehend genannte hat,
- X: ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- D: ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- f: eine ganze Zahl von 0 bis 3 ist
- g: eine ganze Zahl von 0 bis 3 ist, wobei z + y ungleich 0 sind,
- h: eine ganze Zahl von 1 bis 10 ist.

Gegebenenfalls werden die elementorganischen Verbindungen mit einer Organometallverbindung der Formel III bis VI und oder VII [M⁴R¹⁹_{q}]ₖ kombiniert, worin M⁴ ein Element der I., II. und III. Hauptgruppe des Periodensystems der Elemente ist, R¹⁹ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₄₀-Aryl-, C₇-C₄₀-Aryl-alkyl oder C₇-C₄₀-Alkyl-aryl-Gruppe bedeutet, q eine ganze Zahl von 1 bis 3 und k ist eine ganze Zahl von 1 bis 4 ist.

Beispiele für die cokatalytisch wirkenden Verbindungen der Formeln A und B sind

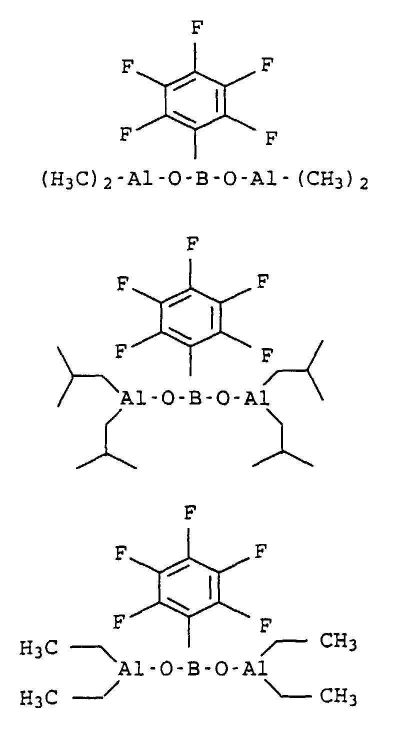

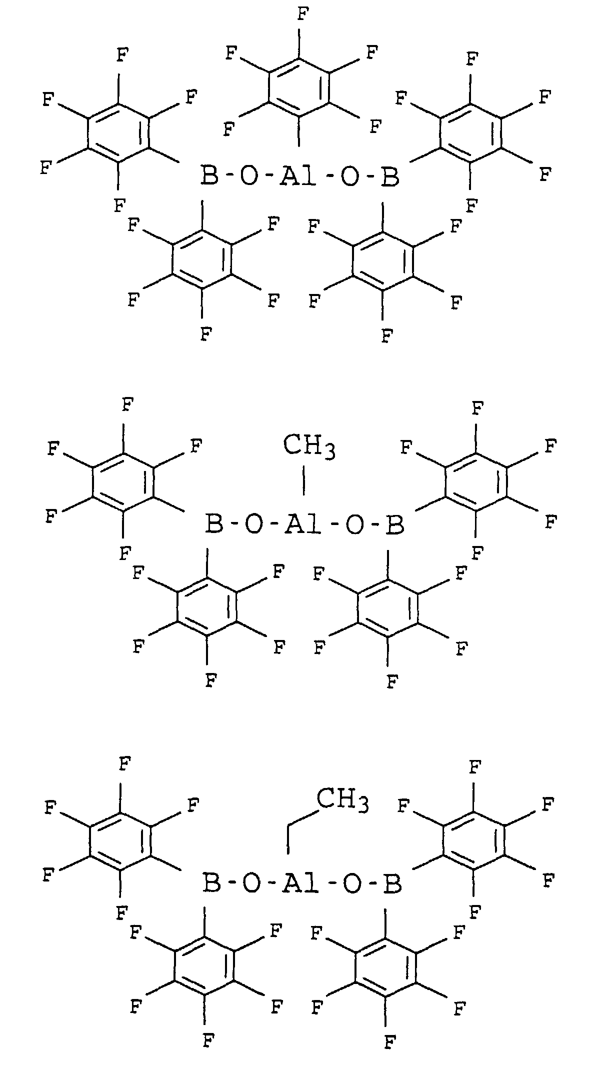

Bei den Organometallverbindungen der Formel VII handelt es sich vorzugsweise um neutrale Lewissäuren worin M⁴ für Lithium, Magnesium und/oder Aluminium, insbesondere Aluminium, steht. Beispiele für die bevorzugten Organometall-Verbindungen der Formel VIII sind Trimethylaluminium, Triethylaluminium, Tri-isopropylaluminium, Trihexylaluminium, Trioctylaluminium, Tri-n-butylaluminium, Tri-n-propylaluminium, Triisoprenaluminium, Dimethylaluminiummonochlorid, Diethyl-aluminiummonochlorid, Diisobutylaluminiummonochlorid, Methylaluminiumsesqui-chlorid, Ethylaluminiumsesquichlorid, Dimethylaluminiumhydrid, Diethylaluminium-hydrid, Diisopropylaluminiumhydrid, Dimethylaluminium(trimethylsiloxid), Dimethyl-aluminium(triethylsiloxid), Phenylalan, Pentafluorphenylalan und o-Tolylalan.

Als weitere Cokatalysatoren, die ungeträgert oder geträgert vorliegen können, sind die in EP-A-924223, DE 19622207.9, EP-A-601830, EP-A-824112, EP-A-824113, EP-A-811627, WO97/11775 und DE 19606167.9 genannten Verbindungen zu verwenden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂ , TiO₂ oder B₂O₃ ,um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 ∝m auf. Bevorzugt sind Träger mit einer spezifischen Oberfläche im Bereich von 50 bis 500 ∝m , einem Porenvolumen im Bereich zwischen 0,5 und 3,5 ml/g und einer mittleren Partikelgröße im Bereich von 5 bis 350 ∝m. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 ∝m.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Das Katalysatorsystem wird erfindungsgemäß hergestellt, indem mindestens ein Metallocen als rac-meso-Isomerengemisch, mindestens ein Cokatalysator und mindestens ein inertisierter Träger gemischt werden.

Zur Darstellung des geträgerten Katalysatorsystems wird mindestens eine der oben beschriebenen Metallocen-Komponenten in einem geeigneten Lösemittel mit mindestens einer Cokatalysatorkomponente in Kontakt gebracht, wobei bevorzugt ein lösliches Reaktionsprodukt , ein Addukt oder ein Gemisch erhalten wird. Die so erhaltene Zubereitung wird dann mit dem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:
a) Herstellung einer Metallocen/Cokatalysator-Mischung in einem geeigneten Löse- oder Suspensionsmittel, wobei die Metallocen-Komponente eine der zuvor beschriebenen Strukturen besitzt.
b) Aufbringen der Metallocen/Cokatalysatormischung auf einen porösen, bevorzugt anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden. Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten. Lösung bzw. des Metallocen-Cokatalysator-gemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren.

Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist. Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins bevorzugt eines α-Olefins (beispielsweise Styrol oder Phenyldimethylvinylsilan) als aktivitätssteigernde Komponente oder beispielsweise eines Antistatikums zugesetzt werden.

Als Antistatikum wird üblicherweise eine Mischung aus einem Metallsalz der Medialansäure, einem Metallsalz der Anthranilsäure und einem Polyamin eingesetzt. Derartige Antistatika werden beispielsweise in EP-A-0,636,636 beschrieben.

Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins niedriger Molmasse von 50000-300000, ganz besonders bevorzugt sind Molmassen zwischen 70000-250000, durch Polymerisation einer oder mehrerer Olefine in Gegenwart des Katalysatorsystems, enthaltend mindestens eine Übergangsmetallkomponente der erfindungsgemäßen Metallocene der Formel I oder II. Unter dem Begriff Polymerisaton wird eine Homopolymerisation wie auch eine Copolymerisation verstanden. Um gesättigte Kettenenden herzustellen und damit eine Feineinstellung der Molmassen (des MFI) zu erreichen, kann wahlweise eine geringe Menge an Wasserstoff während der Polymerisation zudosiert werden.

Das dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Bei der Polymerisation kann das Antistatikum zusammen mit oder getrennt von dem eingesetzten Katalysatorsystem in das Polymerisationssystem eindosiert werden.

Die mit dem Katalysatorsystem, das mindestens eines der erfindungsgemäßen Metallocene enthält, dargestellten Polymere, zeigen eine gleichmäßige Kornmorphologie und weisen keine Feinkornanteile auf. Bei der Polymerisation mit dem Katalysatorsystem treten keine Beläge oder Verbackungen auf.

Mit dem Katalysatorsystem werden Polymere, wie Polypropylen mit außerordentlich hoher Stereo- und Regiospezifität erhalten.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Die Darstellung von 7-Chloro-1H-inden erfolgt nach einer modifizierten Vorschrift von D. A Netzel et al. J. Org. Chem. 1998, 22, 4226-4237. Die Darstellung von Heteropentalertsystemen erfolgt nach einer Vorschrift von Ewen et al. , Metalorganic Catalysts for Synthesis and Polymerisation, 1999, Springer-Verlag, 150-169.

### Beispiel 1: Darstellung von 1-Propionsäure-2-Chlorobenzol

Eine Lösung aus 171.0 g (2.51 mol) Natriumethanolat in Ethanol werden mit 149.2 g (932 mmol) Diethylmalonat versetzt. Zu dieser Reaktionsmischung werden 50.0g (311 mmol) 2-Chlorbenzylchlorid gegeben, nach beendeter Zugabe wird die Reaktionsmischung drei Stunden unter Rückfluß gekocht. Nach Abkühlung auf Raumtemperatur werden 480 g (1.71 mol) einer KOH-Lösung hinzugegeben und anschließend eine weiter Stunde unter Rückfluß gekocht. Danach wird das Ethanol abdestilliert und der Rückstand wäßrig aufgearbeitet und dreimal mit je 100 ml Diethylether extrahiert. Die organische Phase wird verworfen und die wäßrige Phase mit konz. HCL auf pH 1 eingestellt. Anschließend wird dreimal mit je 100 ml Diethylether extrahiert. Die vereinigten organischen Phasen werden mit 100 ml Wasser und danach mit 100ml einer gesättigten NaCl-Lösung gewaschen.

Nach Trocknung über Magnesiumsulfat wird das Lösungsmittel im Ölpumpenvakuum entfernt. Der Rückstand wird in Heptan aufgenommen und anschließend auf 180 °C erhitzt. Nach beendeter Gasentwicklung wird das Lösungsmittel im Ölpumpenvakuum entfernt. Man isoliert 43.8 g (91 %) des gewünschten Produktes. Das dargestellte Produkt wird ohne weiter Aufreinigung für die nächste Stufe eingesetzt.

### Beispiel 2: Darstellung von 4-Chlorindanon

33.5 g (181mmol) des 1-Propionsäure-2-Chlorobenzols werden in 83.4 ml Thionylchlorid vorgelegt und eine Stunde bei 80 °C gerührt. Anschließend wird das überschüssige Thionylchlorid abgezogen und der Rückstand mit 200 ml Heptan versetzt. Man verrührt die Reaktionsmischung 30 Minuten und entfernt anschließend das Lösungsmittel im Ölpumpenvakuum. Der Rückstand wird in 536 ml Methylenchlorid aufgenommen und unter Eiskühlung innerhalb von 10 Minuten portionsweise mit 48.4 g (363 mmol)Aluminiumtrichlorid versetzt. Die so entstandene Reaktionslösung wird weitere 2 Stunden bei 0°C gerührt, bevor die Reaktionsmischung auf 300ml Eiswasser gegeben wird. Nachdem die wäßrige Phase abgetrennt und einmal mit 60 ml Toluol extrahiert wurde, werden die vereinigten organischen Phasen mit 80 ml Wasser und mit 100ml gesättigter NaCl-Lösung gewaschen. Nach Trocknung über Magnesiumsulfat wird das Lösungsmittel im Ölpumpenvakuum entfernt. Man isoliert 29 g (96%) des gewünschten Produktes.

### Beispiel 3: Darstellung von 4-(4'-tert.butyl-phenyl)indanon

14.0 g (84mmol) 4-Chlorindanons, 32.9 g (185 mmol) 4-tert.Butyl-phenylboronsäure, 230 ml Ethylenglykol und 38 ml Wasser mit 19.6 g Natriumcarbonat werden vorgelegt und dreimal entgast. Anschließend wird eine Lösung aus 94 mg (0.42mmol) Pd(oAc)₂ und 2.1 ml (1.26mmol) TPPTS in 2ml Wasser zugegeben. Die so entstandene Reaktionsmischung wird 5 Stunden unter Rückfluß gekocht. Nach dem Abkühlen wird dreimal mit Toluol extrahiert und die vereinigten organischen Phasen mit gesättigter NaCl-Lösung gewaschen. Nach Trocknung über Magnesiumsulfat wird das Lösungsmittel im Ölpumpenvakuum entfernt. Man isoliert 21.3 g (96%) des gewünschten Produktes.

### Beispiel 4: Darstellung von 4-(4'-tert.butyl-phenyl)inden

9.0 g (34 mmol) 4-(4'-tert.butyl-phenyl)indanon werden mit 1.3 g (34mmol) Natriumborhydrid in 32 ml Toluol vorgelegt. Die Reaktionsmischung wird auf 50 °C erwärmt und innerhalb von 10 Minuten mit 6.2 ml (148mmol) Methanol versetzt. Es wird nach beendeter Zugabe 2 Stunden bei 50 °C gerührt. Nach Zugabe von 30 ml einer gesättigten Ammoniumchlorid-Lösung wird 30 Minuten nachgerührt. Nach dem Abtrennen der wäßrigen Phase, wird die organische Phase jeweils einmal mit einer gesättigten Ammoniumchlorid- und Natriumchlorid-Lösung gewaschen. Nach Trocknung über Magnesiumsulfat wird das Lösungsmittelgemisch am Rotationsverdampfer entfernt, der Rückstand mit Toluol auf 150 ml Gesamtvolumen aufgefüllt und mit 0.2 g p-Toluolsulfonsäure versetzt. Nach 30 Minuten wird keine Wassereliminierung mehr beobachtet. Die Reaktionsmischung wird anschließend einmal mit einer gesättigten Natriumhydrocarbonat-Lösung gewaschen, danach wird über Magnesiumsulfat getrocknet und das Lösungsmittel im Ölpumpenvakuum entfernt. Man isoliert 7.3 g (86%) des gewünschten Produktes.

Das 4-Phenylinden und das 4,5-Benzoinden werden analog zu dem oben angeführten Synthesebeispielen dargestellt.

### Beispiel 5: Darstellung von 2-Methyl-4- (4' tert.butyl-phenyl)1-dimethylchlorosilan-inden

20.0 g (76 mmol) 2-Methyl-4-(4'-tert.butyl-phenyl-inden werden in 160 ml Toluol und 5 ml DME vorgelegt. Zu dieser Lösung werden 28.4 ml (76mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 27.7 ml (229 mmol) Dimethyldichlorosilan in 260 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Flitrats im Ölpumpenvakuum entfernt. Man isoliert 24.8 g (98 %) des gewünschten Produktes.
1H-NMR (400 MHz, CDCl₃): 7.3-7.0 (m, 7H, arom- H), 6.7 (s, 1H, Olefin-H-Inden), 3.5 (s, 1H, H-Inden), 2.1 (s, 3H, CH₃), 1.3 (s, 9H, tert.Butyl), 0.3, 0.05 (je s, je 3H, CH₃-Si).

### Beispiel 6: Darstellung von 2-Ethyl-4- (4' tert.butyl-phenyl)1-dimethylchlorosilan-inden

20.0 g (72.4 mmol) 2-Ethyl-4-(4'-tert.butyl-phenyl-inden werden in 153 ml Toluol und 4.8 ml DME vorgelegt. Zu dieser Lösung werden 27.0 ml (72.4 mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 26.3 ml (217 mmol) Dimethyldichlorosilan in 248 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 25.5 g (95 %) des gewünschten Produktes.
1H-NMR (400 MHz, CDCl₃) : 7.3-7.0 (m, 7H, arom- H), 6.7 (s, 1H, Olefin-H-Inden), 3.6 (s, 1H, H-Inden), 2.6, 2.4 (je m, 1H, CH₂) 1.3 (s, 9H, tert.Butyl), 1.1 (t, 3H, CH₃), ( 0.3, 0.0 (je s, je 3H, CH₃-Si).

### Beispiel 7: Darstellung von 2-Methyl-(4-thiapentalen)1-dimethylchlorosilan

20.0 g (148 mmol) 2-Methyl-(2-hydrocyclopenta[2, 1-b]-thiophen) werden in 260 ml Toluol und 8 ml DME vorgelegt. Zu dieser Lösung werden 55.3 ml (148 mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 53.9 ml (446 mmol) Dimethyldichlorosilan in 460 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 29.1 g (86 %) des gewünschten Produktes.
1H-NMR (400 MHz, CD₂Cl₂) : 7.3-6.8 (m, 2H), 6.7-6.4 (m, 1H), 4.0-3.4 (m, 2H), 2.6 (m, 3H, CH₃), 0.3, -0.05 (je s, je 3H,CH₃-Si).

Andere Indenyl-Dimetylchlorosilan- und Heteropentalen-Dimethylchlorosilan- systeme können analog zu den oben beschriebenen Beispielen synthetisiert werden.

### Beispiel 8: Darstellung von Dimethylsilandiyl(2-methyl-4- (4' tert.butyl-phenyl)-inden)(1-inden)

Es werden 4.1 g (35.2 mmol) Inden in 80 ml Toluol und 3 ml THF vorgelegt und mit 13.1 ml (35.2 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 12.5 g (35.2 mmol) 2-Methyl-4- (4' tert.butyl-phenyl)1-dimethylchlorosilan-inden in 150 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 15.0 g (98%) des gewünschten Liganden-Systems.
1H-NMR (400 MHz, CDCl₃): 7.6-7.2 (m, 11H, arom- H), 6.9-7.05 (m, 1H, Olefin-H-Inden), 6.7, 6.5 (je d, je 1H, H-Inden), 3.7, 3.8 (je d, je 1H, Inden-H-Brücke), 2.35 (d, 3H, CH₃), 1.5 (s, 9H, tert.Butyl), 0.0, 0.3 (je d, je 3H, Si-CH₃).

### Beispiel 9: Darstellung von Dimethylsilandiyl(2-ethyl-4- (4' tert.butyl-phenyl)-inden)(1-inden)

Es werden 3.9 g (33.9 mmol) Inden in 77 ml Toluol und 2.9 ml THF vorgelegt und mit 12.6 ml (33.9 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 12.5 g (33.9 mmol) 2-Methyl-4- (4' tert.butyl-phenyl)1-dimethylchlorosilan-inden in 144 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 14.6 g (96%) des gewünschten Liganden-Systems.
1H-NMR (400 MHz, CDCl₃) : 7.6-7.3 (m, 11H, arom- H), 6.95 (d, 1H, Olefin-H-Inden), 6.7, 6.5 (je d, je 1H, H-Inden), 3.8-3.9 (dd, 2H, Inden-H-Brücke), 2.8,2.6 (je m, je 1H, CH₂), 1.5 (s, 9H, tert.Butyl), 1.3 (t, 3H, CH₃), 0.0, -0.3 (je d, je 3H, Si-CH₃).

### Beispiel 10: Darstellung von Dimethylsilandiyl(2-methyl-4- (4' tert.butyl-phenyl)-inden) (4-(4' tert.butyl-phenyl)-inden)

Es werden 9.1 g (36.6 mmol) 4-(4' tert.butyl-phenyl)-inden in 83 ml Toluol und 3.1 ml THF vorgelegt und mit 13.7 ml (36.6 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 13.0 g (36.6 mmol) 2-Methyl-4- (4' tert.butylphenyl)1-dimethylchlorosilan-inden in 156 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 18.9 g (91%) des gewünschten Liganden-Systems.
1H-NMR (400 MHz, CDCl₃): 7.4-7.0 (m, 14H, arom- H), 6.75 (d, 1H, Olefin-H-Inden), 6.6, 6.4 (je d, je 1H, H-Inden), 3.6-3.5 (dd, 2H, Inden-H-Brücke), 2.2 (d, 3H, CH₃), 1.5, 1.4 (je s, je 9H, tert.Butyl), -0.1, -0.3 (je d, je 3H, Si-CH₃).

### Beispiel 11: Darstellung von Dimethylsilandiyl(2-ethyl-4- (4' tert.butyl-phenyl)-inden) (4- (4' tert.butyl-phenyl)-inden)

Es werden 8.4 g (33.9 mmol) 4-(4' tert.butyl-phenyl)-inden in 77 ml Toluol und 2.9 ml THF vorgelegt und mit 12.6 ml (33.9 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 12.5 g (33.9 mmol) 2-Ethyl-4- (4' tert.butyl-phenyl)1-dimethylchlorosilan-inden in 144 ml Toluol . Die entstandene Reaktionsmischung wird bei Raumtemperatur aber Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 17.5 g (89%) des gewünschten Liganden-Systems.
1H-NMR (400 MHz, CDCl₃): 7.4-7.1 (m, 14H, arom- H), 6.85 (d, 1H, Olefin-H-Inden), 6.6, 6.4 (je d, je 1H, H-Inden), 3.7-3.6 (dd, 2H, Inden-H-Brücke), 2.7, 2.6 (je m, je 1H, CH₂), 1.4, 1.3 (je s, je 9H, tert.Butyl), 1.2 (t, 3H, CH₃), -0.1, -0.3 (je d, je 3H, Si-CH₃).

### Beispiel 12: Darstellung von Dimethylsilandiyl(2-Methyl-(thiapentalen)(4-(4'tert.butyl-phenyl)-inden)

Es werden 8.4 g (33.9 mmol) 4-(4' tert.butyl-phenyl)-inden in 77 ml Toluol und 2.9 ml THF vorgelegt und mit 12.6 ml (33.9 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 7.7 g (33.9 mmol) 2-Methyl-(thiapentalen)1-dimethylchlorosilan in 140 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 11.3 g (76 %) des gewünschten Liganden-Systems.
1H-NMR (400 MHz, CDCl₃) : 7.6-6.8 (m, 10H, arom-H), 6.5 (m, 1H) 6.6, 6.4 (je d, je 1H, H-Inden), 3.7-3.6 (dd, 2H), 3.3-3.0 (m, 2H), 2.4 (m, 3H, CH₃), 1.45 (s, 9H, tert.butyl H), -0.1, -0.3 (je d, je 3H,CH₃-Si).

### Beispiel 13: Darstellung von Dimethylsilandiyl(2-ethyl-4- (4' tert.butyl-phenyl)-inden) (4-phenyl-inden)

Es werden 7.1 g (36.9 mmol) 4-phenyl-inden in 80 ml Toluol und 3.2 ml THF vorgelegt und mit 13.7 ml (36.9 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 13.6 g (36.9 mmol) 2-Ethyl-4- (4' tert.butyl-phenyl)1-dimethylchlorosilan-inden in 150 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 17.0 g (88%) des gewünschten Liganden-Systems.
1H-NMR (400 MHz, CDCl₃) : 7.6-7.1 (m, 15H, arom- H), 6.95 (d, 1H, Olefin-H-Inden), 6.5, 6.3 (je d, je 1H, H-Inden), 3.8-3.7 (dd, 2H, Inden-R-Brücke), 2.7, 2.6 (je m, je 1H, CH₂), 1.5 (s, 9H, tert.Butyl), 1.1 (t, 3H, CH₃), -0.05, -0.3 (je d, je 3H, Si-CH₃).

### Beispiel 14: Darstellung von Dimethylsilandiyl(2-ethyl-4- (4' tert.butyl-phenyl)-inden) (4,5-benzo-inden)

Es werden 6.0 g (35.9 mmol) 4,5-benzo-inden in 80 ml Toluol und 3.2 ml THF vorgelegt und mit 13.3 ml (35.9 mmol) Buthyllithium-Lösung versetzt. Nach beendeter Zugabe wird die Reaktionslösung auf 80 °C erhitzt und 1 Stunde bei dieser Temperatur gerührt. Man läßt anschließend auf Raumtemperatur abkühlen und tropft diese Lösung innerhalb von 1 Stunde bei Raumtemperatur zu einer Lösung aus 13.2 g (35.9 mmol) 2-Ethyl-4- (4' tert.butyl-phenyl)1-dimethylchlorosilan-inden in 150 ml Toluol . Die entstandene Reaktionsmischung wird bei Raumtemperatur über Nacht gerührt. Danach wird die Reaktionslösung auf 100ml Wasser gegeben und die organische Phase abgetrennt. Die wäßrige Phase wird einmal mit 50 ml Toluol extrahiert und die vereinigten organischen Phasen über Magnesiumsulfat getrocknet. Das Lösungsmittel wird im Ölpumpenvakuum abgezogen und man isoliert 15.0 g (84%) des gewünschten Liganden-Systems.
1H-NMR (400 MHz, CDCl₃): 7.6-7.1 (m, 13H, arom- H), 6.8 (d, 1H, Olefin-H-Inden), 6.7, 6.5 (je d, je 1H, H-Inden), 4.0, 3.9 (je d, je 1H, Inden-H-Brücke), 2.6, 2.4 (je m, je 1H, CH₂), 1.4 (s, 9H, tert.Butyl), 1.1 (t, 3H, CH₃), 0.0, -0.2 (je d, je 3H, Si-CH₃).

### Beispiel 15: Darstellung von Dimethylsilandiyl(2-methyl-4- (4' tert.butyl-phenyl)-indenyl)(1-indenyl)zirkoniumdichlorid

Es werden 6.0 g (13.8 mmol) Dimethylsilandiyl(2-methyl-4- (4' tert.butyl-phenyl)-inden)(1-inden) in 60 ml Diethlyether vorgelegt und mit 10.2 ml (27.6 mmol) Buthyllithium-Lösung versetzt. Nach beendeter Zugabe wird die Reaktionslösung über Nacht bei Raumtemperatur gerührt. Man läßt anschließend auf 0 °C abkühlen und gibt portionsweise 3.3 g (13.8 mmol) Zirkoniumtetrachlorid hinzu. Die entstandene suspensive Reaktionsmischung wird bei Raumtemperatur 2 Stunden gerührt. Danach wird das unlösliche Lithiumchlorid über eine G4-Fritte abgetrennt und zweimal mit je 40 ml Toluol gewaschen. Das Lösungsmittel des Filtrats wird anschließend im Ölpumpenvakuum entfernt und der verbliebene Rückstand mit 50 ml Pentan gewaschen. Nach Trocknung im Ölpumpenvakuum isoliert 6.99 g (85%) des gewünschten Komplexes.
Pseudo-rac: 7.6-6.9 (m, 13 H, arom- H), 6.2 (d, 1H, H-Inden), 2.3 (s, 3H, CH₃), 1.4 (s, 9H, tert.Butyl), 1.3, 1.1 (je s, je 3H, Si-CH₃). Pseudo-meso: 7.7-6.7 (m, 17 H, arom- H), 6.15 (d, 1H, H-Inden), 2.4 (s, 3H, CH₃), 1.35 (s, 9H, tert.Butyl), 1.5 (s, 6H, Si-CH₃).

### Beispiel 16: Darstellung von Dimethylsilandiyl(2-ethyl-4- (4' tert.butyl-phenyl)-indenyl)(1-indenyl)zirkoniumdichlorid

Es werden 5.6 g (12.4 mmol) Dimethylsilandiyl(2-ethyl-4- (4' tert.butyl-phenyl)-inden)(1-inden) in 70 ml Diethlyether vorgelegt und mit 9.4 ml (25.0 mmol) Buthyllithium-Lösung versetzt. Nach beendeter Zugabe wird die Reaktionslösung über Nacht bei Raumtemperatur gerührt. Man läßt anschließend auf 0 °C abkühlen und gibt portionsweise 2.9 g (12.4 mmol) Zirkoniumtetrachlorid hinzu. Die entstandene suspensive Reaktionsmischung wird bei Raumtemperatur 2 Stunden gerührt. Danach wird das unlösliche Lithiumchlorid über eine G4-Fritte abgetrennt und zweimal mit je 30 ml Toluol gewaschen. Das Lösungsmittel des Filtrats wird anschließend im Ölpumpenvakuum entfernt und der verbliebene Rückstand mit 50 ml Pentan gewaschen. Nach Trocknung im Ölpumpenvakuum isoliert 4.7 g (62 %) des gewünschten Komplexes.
Pseudo-rac: 7.6-6.8 (m, 13 H, arom- H), 6.2 (d, 1H, H-Inden), 2.6, 2.5 (je m, je 1H, CH₂), 1.3 (, 9H, tert.Butyl), 1.4, 1.1 (je s, je 3H, Si-CH₃). Pseudo-meso: 7.7-6.7 (m, 17 H, arom- H), 6.15 (d, 1H, H-Inden), 2.6 (m, 2H, CH₂), 1.35 (s, 9H, tert.Butyl), 1.25 (s, 6H, Si-CH₃).

### Beispiel 17: Darstellung von Dimethylsilandiyl(2-methyl-4- (4' tert.butyl-phenyl)-indenyl)(4- (4' tert.butyl-phenyl)-indenyl)zirkoniumdichlorid

Es werden 6.2 g (10.9 mmol) Dimethylsilandiyl(2-methyl-4- (4' tert.butyl-phenyl)-inden) )(4-(4' tert.butyl-phenyl)-inden) in 60 ml Diethlyether vorgelegt und mit 8.2 ml (21.9 mmol) Buthyllithium-Lösung versetzt. Nach beendeter Zugabe wird die Reaktionslösung über Nacht bei Raumtemperatur gerührt. Man läßt anschließend auf 0 °C abkühlen und gibt portionsweise 2.6 g (10.9 mmol) Zirkoniumtetrachlorid hinzu. Die entstandene suspensive Reaktionsmischung wird bei Raumtemperatur 3 Stunden gerührt. Danach wird das unlösliche Lithiumchlorid über eine G3-Fritte abgetrennt und zweimal mit je 15 ml THF gewaschen. Das Lösungsmittel des Filtrats wird anschließend im Ölpumpenvakuum entfernt. Man isoliert 5.7 g (72 %) des gewünschten Komplexes.
1H-NMR (400 MHz, CDCl₃): Pseudo-rac: 7.6-6.7 (m, 16 H, arom- H), 5.9 (d, 1H, H-Inden), 2.1 (s, 3H, CH₃), 1.25, 1.2 (je s, je 9H, tert.Butyl), 1.4, 1.1 (je s, je 3H, Si-CH₃). Pseudo-meso: 7.6-6.7 (m, 16 H, arom- H), 6.0 (d, 1H, H-Inden), 2.2 (s, 3H, CH₃), 1.3, 1.15 (je s, je 9H, tert.Butyl), 1.5 (s, 6H, Si-CH₃).

### Beispiel 18: Darstellung von Dimethylsilandiyl(2-ethyl-4- (4' tert.butyl-phenyl)-indenyl)(4-(4' tert.butyl-phenyl))-indenyl)zirkoniumdichlorid

Es werden 18.4 g (31.7 mmol) Dimethylsilandiyl(2-ethyl-4- (4' tert.butyl-phenyl)-inden)(4-(4' tert.butyl-phenyl)-inden) in 180 ml Diethlyether vorgelegt und mit 23.6 ml (63.3 mmol) Buthyllithium-Lösung versetzt. Nach beendeter Zugabe wird die Reaktionslösung über Nacht bei Raumtemperatur gerührt. Man läßt anschließend auf 0 °C abkühlen und gibt portionsweise 7.4 g (31.7 mmol) Zirkoniumtetrachlorid hinzu. Die entstandene suspensive Reaktionsmischung wird bei Raumtemperatur 3 Stunden gerührt. Danach wird das unlösliche Lithiumchlorid über eine G3-Fritte abgetrennt und zweimal mit je 40 ml THF gewaschen. Das Lösungsmittel des Filtrats wird anschließend im Ölpumpenvakuum entfernt und der Rückstand über 50 ml Pentan 1 Stunde bei Raumtemperatur verrührt. Nach Abtrennung des Pentans und Trocknung des Feststoffes isoliert man 12.9 g (55 %) des gewünschten Komplexes.
1H-NMR (400 MHz, CDCl₃): Pseudo-rac: 7.7-6.8 (m, 16 H, arom- H), 6.1 (d, 1H, H-Inden), 2.6, 2.5 (je m, je 1H, CH₂), 1.25, 1.2 (je s, je 9H, tert.Butyl), 1.4, 1.1 (je s, je 3H, Si-CH₃). Pseudo-meso: 7.7-6.8 (m, 16 H, arom- H), 6.2 (d, 1H, H-Inden), 2.6 (m, 2H, CH₂), 1.35, 1.3 (je s, je 9H, tert.Butyl), 1.5 (s, 6H, Si-CH₃).

### Beispiel 19: Darstellung von Dimethylsilandiyl(2-methyl-thiapentenyl)(4-(4' tert.butyl-phenyl)indenyl)zirkoniumdichlorid

Es werden 11.0 g (25.0 mmol) Dimethylsilandiyl(2-methyl-thiapentalen)(4-(4' tert.butyl-phenyl)inden in 160 ml Diethlyether vorgelegt und mit 18.7 ml (50.0 mmol) Buthyllithium-Lösung versetzt. Nach beendeter Zugabe wird die Reaktionslösung über Nacht bei Raumtemperatur gerührt. Man läßt anschließend auf 0 °C abkühlen und gibt portionsweise 5.8 g (25.0 mmol) Zirkoniumtetrachlorid hinzu. Die entstandene suspensive Reaktionsmischung wird bei Raumtemperatur 2.5 Stunden gerührt. Danach wird das unlösliche Lithiumchlorid über eine G3-Fritte abgetrennt und zweimal mit je 30 ml THF gewaschen. Das Lösungsmittel des Filtrats wird anschließend im Ölpumpenvakuum entfernt. Nach Trocknung des Feststoffes isoliert man 9.7 g (65 %) des gewünschten Komplexes.
1H-NMR (400 MHz, CDCl₃): Pseudo-rac: 7.7-6.8 (m, 11 H, arom- H), 6.6-6.5 (m, 1H, H-thionpentalen), 6.0 (d, 1H, H-Inden), 2.1 (m, 3H, CH₃), 1.4 (s, 9H, tert.Butyl), 1.5, 1.3 (je s, je 3H, Si-CH₃). Pseudo-meso: 7.7-6.8 (m, 16 H, arom- H), 6.4-6.2 (m, 1H, H-thiopentalen), 6. 1 (d, 1H, H-Inden), 2.3 (m, 3H, CH₃), 1.3 (s, 9H, tert.Butyl), 1.2 (s, 6H, Si-CH₃).

### Beispiel 20: Darstellung von Dimethylsilandiyl(2-ethyl-4- (4' tert.butyl-phenyl)-indenyl)(4-phenyl-indenyl)zirkoniumdichlorid

Es werden 15.0 g (28.6 mmol) Dimethylsilandiyl(2-ethyl-4- (4' tert.butyl-phenyl)-inden)(4-phenyl-inden) in 180 ml Diethlyether vorgelegt und mit 21.3 ml (57.2 mmol) Buthyllithium-Lösung versetzt. Nach beendeter Zugabe wird die Reaktionslösung 5 Stunden bei Raumtemperatur gerührt. Man läßt anschließend auf 0 °C abkühlen und gibt portionsweise 6.7 g (28.6 mmol) Zirkoniumtetrachlorid hinzu. Die entstandene suspensive Reaktionsmischung wird bei Raumtemperatur 4 Stunden gerührt. Danach wird das unlösliche Lithiumchlorid über eine G4-Fritte abgetrennt und zweimal mit je 40 ml THF gewaschen. Das Lösungsmittel des Filtrats wird anschließend im Ölpumpenvakuum entfernt und der Rückstand über 50 ml Pentan 1 Stunde bei Raumtemperatur verrührt. Nach Abtrennung des Pentans und Trocknung des Feststoffes isoliert man 8.8 g (45 %) des gewünschten Komplexes.
Pseudo-rac: 7.7-6.7 (m, 17 H, arom- H), 6.0 (d, 1H, H-phenyl-Inden), 2.4, 2.2 (je m, je 1H, CH₂), 1.4 (, 9H, tert.Butyl), 1.5, 1.3 (je s, je 3H, Si-CH₃). Pseudo-meso: 7.7-6.7 (m, 17 H, arom- H), 6.15 (d, 1H, H-phenyl-Inden), 2.4 (m, 2H, CH₂), 1.45 (s, 9H, tert.Butyl), 1.1 (s, 6H, Si-CH₃).

### Beispiel 21: Darstellung von Dimethylsilandiyl(2-ethyl-4- (4' tert.butyl-phenyl)-indenyl)(4,5 benzo-indenyl)zirkoniumdichlorid

Es werden 15.0 g (30.8 mmol) Dimethylsilandiyl(2-ethyl-4- (4' tert.butyl-phenyl)-inden) (4,5 benzo-inden) in 190 ml Diethlyether vorgelegt und mit 21.3 ml (61.6 mmol) Buthyllithium-Lösung versetzt. Nach beendeter Zugabe wird die Reaktionslösung 4 Stunden bei Raumtemperatur gerührt. Man läßt anschließend auf 0 °C abkühlen und gibt portionsweise 7.0 g (30.8 mmol) Zirkoniumtetrachlorid hinzu. Die entstandene suspensive Reaktionsmischung wird bei Raumtemperatur 4 Stunden gerührt. Danach wird das unlösliche Lithiumchlorid über eine G4-Fritte abgetrennt und zweimal mit je 40 ml THF gewaschen. Das Lösungsmittel des Filtrats wird anschließend im Ölpumpenvakuum entfernt. Umkristallisieren aus THF/ Pentan liefert 7.9 g (40 %) des gewünschten Komplexes.
Pseudo-rac: 8.0-6.9(m, 15 H, arom- H), 6.4 (d, 1H, H-benzo-Inden), 2.5, 2.3 (je m, je 1H, CH₂), 1.4 (, 9H, tert.Butyl), 1.5, 1.3 (je s, je 3H, Si-CH₃). Pseudo-meso: 8.0-6.9 (m, 17 H, arom- H), 6.5 (d, 1H, H-benzo-Inden), 2.5 (m, 2H, CH₂), 1.45 (s, 9H, tert.Butyl), 1.1 (s, 6H, Si-CH₃).

### Polymerisation

### Beispiel 22: Heterogene Polymerisation von Propen mit Dimethylsilandiyl(2-methyl-4- (4' tert.butyl-phenyl)-indenyl)(1-indenyl)zirkoniumdichlorid

### Herstellung des Katalysatorsystems

53.4 mg (0.09 mmol) Dimethylsilandiyl(2-methyl-4- (4' tert.butyl-phenyl)-indenyl)(1-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 5.5 g eines hellrosa freifließenden Pulvers.

### Beispiel 23: Heterogene Polymerisation von Propen mit Dimethylsilandiyl(2-ethyl-4- (4' tert.butyl-phenyl)-indenyl)(1-indenyl)zirkoniumdichlorid

### Herstellung des Katalysatorsystems

54.8 mg (0.09 mmol) Dimethylsilandiyl(2-ethyl-4- (4' tert.butylphenyl)-indenyl)(1-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 5.6 g eines hellrosa freifließenden Pulvers. Vergleichsbeispiel:

### Beispiel 24: Heterogene Polymerisation von Propen mit Dimethylsilandiyl(2-methyl-4 phenyl-indenyl)(1-indenyl)zirkoniumdichlorid

### Herstellung des Katalysatorsystems

48.5 mg (0.09 mmol) mit Dimethylsilandiyl(2-methyl-4 phenyl-indenyl)(1-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 5.0 g eines hellrosa freifließenden Pulvers.

### Beispiel 25: Heterogene Polymerisation von Propen mit (2-methyl-4-(4' tert.butyl-phenyl)-indenyl)(4-(4' tert.butyl-phenyl)-indenyl)zirkoniumdichlorid

### Herstellung des Katalysatorsystems

65.4 mg (0.09 mmol) (2-methyl-4- (4' tert.butyl-phenyl)-indenyl)(4- (4' tert.butyl-phenyl)-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 6.7 g eines hellrosa freifließenden Pulvers.

### Beispiel 26: Heterogene Polymerisation von Propen mit (2-ethyl-4-(4' tert.butyl-phenyl)-indenyl)(4-(4' tert.butyl-phenyl)-indenyl)zirkoniumdichlorid

### Herstellung des Katalysatorsystems

66.7 mg (0.09 mmol) (2-ethyl-4- (4' tert.butyl-phenyl)-indenyl)(4- (4' tert.butyl-phenyl)-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 6.5 g eines hellrosa freifließenden Pulvers.

### Beispiel 27: Heterogene Polymerisation von Propen mit Dimethylsilandiyl(2-methyl-thiapentenyl)(4-(4' tert.butyl-phenyl)indenyl)zirkoniumdichlorid

### Herstellung des Katalysatorsystems

54.0 mg (0.09 mmol) Dimethylsilandiyl(2-methyl-thiapentenyl)(4-(4' tert.butyl-phenyl)indenyl)zirkoniumdichlorid werden bei Raumtemperatur in. 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 4.9 g eines hellrosa freifließenden Pulvers.

### Beispiel 28: Heterogene Polymerisation von Propen mit Dimethylsilandiyl(2-ethyl-4- (4' tert.butyl-phenyl)-indenyl)(4-phenyl-indenyl)zirkoniumdichlorid

### Herstellung des Katalysatorsystems

60.4 mg (0.09 mmol) Dimethylsilandiyl(2-ethyl-4- (4' tert.butyl-phenyl)-indenyl)(4-phenyl-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 6.1 g eines hellrosa freifließenden Pulvers.

### Beispiel 29: Heterogene Polymerisation von Propen mit Dimethylsilandiyl(2-ethyl-4- (4' tert.butyl-phenyl)-indenyl)(4,5 benzo-indenyl)zirkoniumdichlorid

### Herstellung des Katalysatorsystems

60.3 mg (0.09 mmol) Dimethylsilandiyl(2-ethyl-4- (4' tert.butyl-phenyl)-indenyl)(4,5-benzo-indenyl)zirkoniumdichlorid werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1h bei Raumtemperatur gerührt. Anschließend wird diese Reaktionslösung portionsweise unter Rühren zu 4 g Si0₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren 6.0 g eines hellrosa freifließenden Pulvers.

### Allgemeine Beschreibung der Polymerisation

### Polymerisation

Zum Einschleusen in das Polymerisationssystem wird 1 g des geträgerten Katalysatorsystems in 20 cm³ Exxol resuspendiert.

Parallel dazu wird ein trockener 16-dm3-Reaktor zunächst mit Stickstoff und anschließend mit Propylen gespült und mit 10 dm3 flüssigem Propen befüllt. Als Scavenger werden 8 cm3 einer 20%igen Triethylaluminium-Lösung in Varsol zugesetzt und der Ansatz bei 30°C 15 Minuten gerührt. Anschließend wurde die Katalysatorsuspension in den Reaktor gegeben. Das Reaktionsgemisch wurde auf die Polymerisationstemperatur von 65 °C aufgeheizt (4°C/min) und das Polymerisationssystem 1 h durch Kühlung bei 65 °C gehalten. Gestoppt wurde die Polymerisation durch Abgasen des restlichen Propylens. Das Polymer wurde im Vakuumtrockenschrank getrocknet.

### Polymerisationsergebnisse

| Beispiel | 22 | 23 | 24 | 25 | 26 | 27 | 28 | 29 |
|---|---|---|---|---|---|---|---|---|
| Metallocen (mg)/g Kat. | 9.7 | 9.6 | 9.7 | 9.8 | 10.3 | 11.0 | 9.9 | 10.1 |
| PP (g) | 1270* | 1390* | 990* | 1790* | 1990* | 1340* | 1670* | 1560* |
| Aktivität ¹⁾ | 131 | 142 | 102 | 183 | 194 | 121 | 169 | 155 |
| Smp. (iPP) [°C] | 150 | 151 | 151 | 152 | 154 | 148 | 150 | 151 |
| M_{w}/Mₙ | 2.2 | 2.3 | 2.2 | 2.4 | 2.4 | 2.5 | 2.2 | 2.3 |
| M_{w} | 75000 | 103000 | 125000 | 209000 | 170000 | 190000 | 219000 | 187000 |

| | | | | | | | | |
|---|---|---|---|---|---|---|---|---|
| 1. Aktivität: kg (Polymer) / g Metallocen·h·bar | | | | | | | | |
| 2. * keine Belagsbildung im Kessel, freifließendes Polymerpulver | | | | | | | | |

## Patentansprüche

1. Verbindungen der Formel (I), 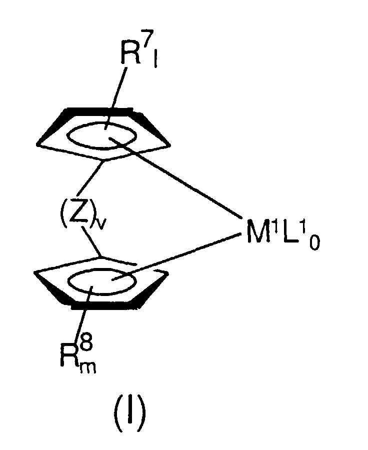 worin
M¹ ein Metall der III., IV., V. oder VI. Nebengruppe des Periodensystems der Elemente ist,
R⁷ gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe, oder R⁷ sind eine C₁-C₃₀ - kohlenstoffhaltige Gruppe, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits substituiert sein kann,
R⁸ gleich oder verschieden sind und ein Wasserstoffatom oder Si(R¹²)₃ sind, worin R¹² gleich oder verschieden ein Wasserstoffatom oder eine C₁-C₄₀-kohlenstoffhaltige Gruppe, oder R⁸ sind eine C₁-C₃₀ - kohlenstoffhaltige Gruppe, die auchmit dem Cyclopentadienylring Azapentalene, Thiopentalen oder Phosphorpentalene bilden können, oder zwei oder mehrere Reste R⁸ können so miteinander verbunden sein, daß die Reste R⁸ und die sie verbindenden Atome des Cyclopentadienylringes ein C₄-C₂₄-Ringsystem bilden, welches seinerseits substituiert sein kann,
l gleich 5 für v = 0, und l gleich 4 für v = 1 ist,
m gleich 5 für v = 0, und m gleich 4 für v = 1 ist,
L¹ gleich oder verschieden sein können und ein Wasserstoffatom, eine C₁-C₁₀-Kohlenwasserstoffgruppe, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
o eine ganze Zahl von 1 bis 4,
Z ein verbrückendes Strukturelement zwischen den beiden Cyclo-pentadienylringen bezeichnet und v ist 0 oder 1 ist.

2. Verbindungen gemaß Anspruch 1, dadurch gekennzeichnet, daß
M¹ Ti, Zr oder Hf,
R⁷ gleich oder verschieden sind und ein Wasserstoffatom oder Si(R¹²)₃ sind, worin R¹² gleich oder verschieden ein Wasserstoffatom, C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁷ sind C₁-C₂₅-Alkyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇₋C₃₀-Alkylaryl oder C₁-C₁₂-Alkoxy ist, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits substituiert sein kann,
R⁸ gleich oder verschieden sind und ein Wasserstoffatom oder Si(R¹²)₃ sind, worin R¹² gleich oder verschieden ein Wasserstoffatom, C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁸ sind C₁-C₂₅-Alkyl, C₂-C₂₅-Alkenyl, C₃-C₁₅-Alkylalkenyl, C₆-C₂₄-Aryl, C₅-C₂₄-Heteroaryl die mit dem Cyclopentadienylring Azapentalene, Thiopentalen oder Phosphorpentalene bilden, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇₋C₃₀-Alkylaryl oder C₁-C₁₂-Alkoxy ist, oder zwei oder mehrere Reste R⁸ können so miteinander verbunden sein, daß die Reste R⁸ und die sie verbindenden Atome des Cyclopentadienylringes ein C₄-C₂₄-Ringsystem bilden, welches seinerseits substituiert sein kann,
L¹ gleich oder verschieden sein können und ein Wasserstoffatom, C₁-C₁₀-Alkyl, C₆-C₁₀-Aryl oder ein Halogenatom,
o die ganze Zahl 2 ist.

3. Verbindungen gemäß Anspruch 1, dadurch gekennzeichnet, daß Z für eine Gruppe MR¹⁰R¹¹ steht, worin M Kohlenstoff oder Silicium ist und R¹⁰ und R¹¹ gleich oder verschieden eine C₁-C₂₀-kohlenwasserstoffhaltige Gruppe bedeutet.

4. Verbindungen gemäß Anspruch 3, dadurch gekennzeichnet, daß R¹⁰ und R¹¹ gleich oder verschieden C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten.

5. Verbindungen gemäß Anspruch 3, dadurch gekennzeichnet, daß Z für eine Gruppe Si(Me)₂, Si(Ph)₂, Si(MeEt), Si(PhMe), Si(PhEt), Si(Et)₂, worin Ph für substituiertes oder unsubstituiertes Phenyl, Et für Ethyl und Me für Methyl steht.

6. Verbindungen gemäß Anspruch 1, dadurch gekennzeichnet, daß das Metallocen durch die Formel (II) 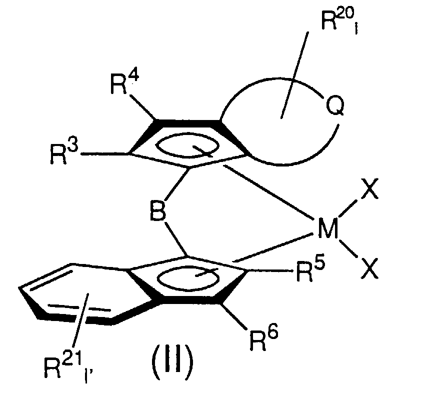 worin
M gleich Ti, Zr oder Hf ist, besonders bevorzugt Zirkonium,
R³ gleich ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist,
R⁵ gleich ein Wasserstoffatom ist,
R⁴, R⁶ gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist,
R²⁰, R²¹ gleich oder verschieden sind und ein Wasserstoffatom, Halogenatom oder eine C₁-C₂₀ - kohlenstoffhaltige Gruppe bedeuteten, bevorzugt eine lineare oder verzweigte C₁-C₁₈-Alkylgruppe, wie Methyl, Ethyl, tert.-Butyl, Cyclohexyl oder Octyl, C₂-C₁₀-Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl sind, und zwei Reste R²⁰ oder R²¹ ein mono- oder polycyclisches Ringssystem bilden können, das seinerseits gegebenenfalls substituiert sein kann,
X ein Halogenatom, insbesondere Chlor, ist,
Q ein C₄-C₂₄-Aryl-Ringsystem welches seinerseits durch R²⁰ substituiert sein kann, ein Heteroaryl die mit dem Cyclopentadienylring Azapentalene, Thiopentalen oder Phosphorpentalene bilden, welche ihrerseits durch R²⁰ substituiert sein können
l, l' gleich oder verschieden eine ganze Zahl zwischen Null und 4, bevorzugt 1 oder 2, besonders bevorzugt gleich 1 sind,
B ein verbrückendes Strukturelement zwischen den beiden Indenylresten bezeichnet,
beschrieben wird.

7. Verbindungen gemäß Anspruch 6, dadurch gekennzeichnet, daß B für eine Gruppe M³R¹³R¹⁴, worin M³ Silicium ist und R¹³ und R¹⁴ gleich oder verschieden eine C₁-C₂₀-kohlenwasserstoffhaltige Gruppe wie C₁-C₁₀-Alkyl, C₆-C₁₄-Aryl, Trialkylsilyl, insbesondere Trimethylsilyl, Triarylsilyl oder eine Alkyl-Aryl-Silyl Gruppe bedeuten, steht.

8. Verbindungen gemäß Anspruch 7, dadurch gekennzeichnet, daß B eine Gruppe Si(Me)₂, Si(Ph)₂, Si(MeEt), Si(PhMe), Si(PHEt), Si(Et)₂, worin Ph für substituiertes oder unsubstituiertes Phenyl, Et für Ethyl und Me für Methyl steht, bedeutet

9. Verbindungen der Formel (IIa) 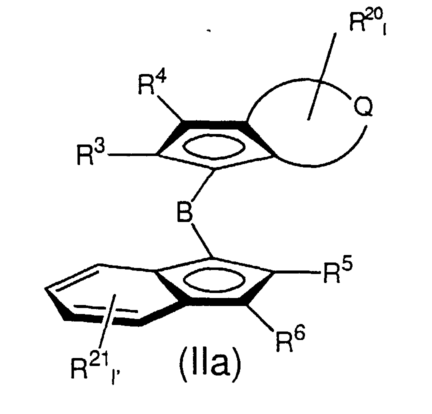 worin
M gleich Ti, Zr oder Hf ist, besonders bevorzugt Zirkonium,
R³ gleich ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist,
R⁵ gleich ein Wasserstoffatom ist,
R⁴, R⁶ gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist,
R²⁰, R²¹ gleich oder verschieden sind und ein Wasserstoffatom, Halogenatom oder eine C₁-C₂₀ - kohlenstoffhaltige Gruppe bedeuteten, bevorzugt eine lineare oder verzweigte C₁-C₁₈-Alkylgruppe, wie Methyl, Ethyl, tert.-Butyl, Cyclohexyl oder Octyl, C₂-C₁₀-Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl sind, und zwei Reste R²⁰ oder R²¹ ein mono- oder polycyclisches Ringssystem bilden können, das seinerseits gegebenenfalls substituiert sein kann,
X ein Halogenatom, insbesondere Chlor, ist,
Q ein C₄-C₂₄-Aryl-Ringsystem welches seinerseits durch R²⁰ substituiert sein kann, ein Heteroaryl die mit dem Cyclopentadienylring Azapentalene, Thiopentalen oder Phosphorpentalene bilden, welche ihrerseits durch R²⁰ substituiert sein können
l, l' gleich oder verschieden eine ganze Zahl zwischen Null und 4, bevorzugt 1 oder 2, besonders bevorzugt gleich 1 sind,
B ein verbrückendes Strukturelement zwischen den beiden Indenylresten bezeichnet, ist.

10. Katalysatorsystem enthaltend ein oder mehrere Verbindung der Formel (I) und/oder (II) gemäß einem der Ansprüche 1 bis 7, sowie ein oder mehrere Cokatylsatoren und/oder einen Träger.

11. Verwendung einer Verbindung der Formel (IIa) gemäß Anspruch 8 zur Herstellung einer Verbindung der Formel (II) gemäß Anspruch 6.

12. Verwendung einer oder mehrer Verbindungen der Formel (I) und/oder (II) gemäß einem der Ansprüche 1 bis 7 zur Herstellung eines Polyolefins.

13. Verwendung eines Katalysatorsystem gemäß Anspruch 9 zur Herstellung eines Polyolefins.

14. Verwendung des Katalysatorsystems gemäß Anspruch 12 zur Herstellung von Polyolefinen mit einer Molmasse zwischen 50000 und 300000 g/mol.

15. Verwendung des Katalysatorsystems gemäß Anspruch 13 zur Herstellung von isotaktischen Polypropylen mit einer Molmasse zwischen 50000 und 300000 g/mol.

16. Verwendung des Katalysatorsystems gemäß Anspruch 14 zur Herstellung von isotaktischen Polypropylen mit einer Molmasse zwischen 70000 und 250000 g/mol.

17. Verfahren zur Herstellung eines Polyolefins durch Polymerisation eines oder mehrer Olefine in Gegenwart einer oder mehrer Verbindungen der Formel (I) und/oder (II) gemäß den Ansprüchen 1 bis 7.

18. Verfahren gemäß Anspruch 16, dadurch gekennzeichnet, daß Polypropylen, insbesondere isotaktisches Polypropylen, mit einer Molmasse zwische 50000 und 300000 g/mol erzeugt wird.
